# EUROPEAN PATENT SPECIFICATION

(11) **EP 1 182 827 B1**
(45) Date of publication and mention of the grant of the patent: **16.11.2005**
(21) Application number: 01306845.7
(22) Date of filing: 10.08.2001
(51) Int. Cl.: H04L 12/28, H04L 12/64, G06F 13/00

(54) **Information control method, information processing apparatus, and information control system**
Informationssteuerungsverfahren, Informationsverarbeitungsvorrichtung, und Informationssteuerungssystem
Procédé de commande d'information, dispositif de traitement d'information, et système de commande d'information

(30) Priority: 22.08.2000 JP 2000251238
(43) Date of publication of application: 27.02.2002
(73) Proprietor: SONY CORPORATION, Tokyo 141 (JP)
(72) Inventor: Nakano, Takehiko, Intellectual Property Department, Shinagawa-ku, Tokyo 141 (JP); Kawano, Shinichi, Intellectual Property Department, Shinagawa-ku, Tokyo 141 (JP)
(74) Representative: Turner, James Arthur

(56) References cited:
- WO-A-00/26794
- WO-A-99/46922

## Description

The present invention relates to an information control system in which, for example,an information device and a control device are connected via an interface to each other.

Conventionally, there existed an information control system in which an information device and a control device were connected via an interface to each other.

In this information control system, the control device on the side of controlling performed of the information device was called "a controller" and the information device on the side of being controlled performed by the control device was called "a target".

However, in the above described conventional information control system, when the controller controls the target using as a control command a so-called "passthrough command" which is given to the target side in a unified form, there was the following inconvenience. Because, this passthrough command, is such that the controller as an issuer cannot hold information on subunits in the target, when the passthrough command is issued to the target having a plurality of subunits, passthrough the desired subunit cannot be controlled by the current passthrough command.

Moreover, in the above described information control system, when the target has a plurality of portions to be controlled and besides there are a plurality of controllers there was also the following inconvenience. When the target having a plurality of portions to be controlled is controlled by a plurality of controllers, it is impossible to determine which one of the controlled portions in the target should be controlled by which controller. For this reason, this target is difficult to operate as expected by the controller side.

As described above, when a deciding issuer of the control command issued by the controller is unknown, the target having received that command has inconveniently no way of determining how to process that command.

International (PCT) Patent Application Publication No WO-A-00/26794 discloses a home audio/visual network comprising a network having a control device and a target device to be controlled by the control device. The control device, when it desires to control the target device, requests information from the target device. The target sends elements of a user interface to the control device and stores a description of the user interface in memory. The control device generates the interface based on the elements and allows a user to send messages to the target using the generated interface. The target device is responsive to the messages from the user to generate a state change message that is sent to the control device.

International (PCT) Patent Application Publication No WO-A-99/46922 discloses a technique for searching among data devices connected by an IEEE 1394 network. To that end, search criteria are specified in a command structure sent from a control device to a target device, whereupon the target device conducts a search. If the search is successful, the target device sends an identifier, locating the search result data for use by the control device, to the control device.

The present invention provides an information control method according to claim 1 hereof, an information processing apparatus according to claim 10 hereof, and an information control system according to claim 11 hereof.

Accordingly, embodiments of the present invention have the following functions.

Because each of the information device and the control device has information which is peculiar to the relevant device, the respective devices can acquire the information peculiar to the device.

The control device acquires information on the portion to be controlled and, from information on the information device, selects an information device having the portion to be controlled which the user desires to control. Further, from information on the portions to be controlled, the control device selects the portion to be controlled which the user wants to control.

Selector identification information is transmitted to the information device, and the information device acquires selectee identification information. The information device brings the selector identification information and the selectee identification information into correspondence with each other, and preserves the both identification information as a control correspondence table.

When thereafter a request to control the portion to be controlled from the control device is issued, the information device having received that request refers to the identification information on the device having issued that request and the control correspondence table which it preserves therein. The information device, thereby produces an effect of that control request on the portion to be controlled which is made to correspond thereto.

The control device controls the information device, or when selecting it, interprets the operation made by the user and performs its control via communication means.

The information device preserves the control correspondence table therein and so, when having receiving the control request to control the portion to be controlled has been issued from the control device, the information device refers to the control correspondence table, thereby controlling the portion to be controlled appropriately.

This information control system has such a configuration that the information device can preserve the control correspondence table. Accordingly, by referring to the control correspondence table for the control requests from a plurality of control devices, the information device detects the portion to be controlled which is associated with the relevant control device, and it determines that the controlled-portion detected is what the control device desires to control and makes the controlled-portion operated appropriately.

The invention will now be described by way of example with reference to the accompanying drawings, throughout which like parts are referred to by like references, and in which:
FIG. 1 is a configuration diagram showing an example of a control system to which the present invention is applied;
FIG. 2 is an explanatory diagram showing a structure example of the data transmission cycle by IEEE 1394 system bus;
FIG. 3 is an explanatory diagram showing a structure example of the address space in CSR architecture.
FIG. 4 is an explanatory diagram showing examples of position, name, and function of the principal CSR;
FIG. 5 is an explanatory diagram showing an example of the general ROM format;
FIG. 6 is an explanatory diagram showing examples of the bus info block, root directory, and unit directory;
FIG. 7 is an explanatory diagram showing a structure example of the PCR;
FIG. 8A to FIG. 8D are explanatory diagrams each showing a structure example of oMOR, oPCR, iMPR, and iPCR;
FIG. 9 is an explanatory diagram showing an example of the relation among the plug, plug control register, and transmission channel;
FIG. 10 is an explanatory diagram showing an example of the data structure according to a hierarchical structure of descriptor;
FIG. 11 is an explanatory diagram showing an example of data format of the descriptor;
FIG. 12 is an explanatory diagram showing an example of the generation ID in FIG. 11;
FIG. 13 is an explanatory diagram showing an example of the list ID in FIG. 11;
FIG. 14 is an explanatory diagram showing an example of a stack model of the AV/C command;
FIG. 15 is an explanatory diagram showing the relation between the command and response of FCP;
FIG. 16 is an explanatory diagram showing the relation between the command and response in FIG. 15 in more detail;
FIG. 17 is an explanatory diagram showing an example of data structure of the AV/C command;
FIG. 18 (drawn as FIGS. 18A to 18C) is an explanatory diagram showing a specific example of the AV/C command;
FIG. 19 (drawn as FIGS. 19A and 19B) is an explanatory diagram showing a specific example of the command and response of the AV/C command;
FIG. 20 is a structure diagram showing an example of the information device notification means;
FIG. 21 is a structure diagram showing an example of the controlled-portion notification means;
FIG. 22 is a structure diagram showing an example of the remote controller;
FIG. 23 is a structure diagram snowing an example of the control correspondence table;
FIG. 24 is a diagram showing an example of the control flow; and
FIG. 25 is a diagram showing a format of the passthrough command.

An information control method according to this embodiment enables the control of one desired piece of portion to be controlled in a network which is formed by connecting an information device having a plurality of portions to be controlled with a control device for controlling the information device via communication means, even if means for controlling the portion to be controlled (e.g. a control command for the portion to be controlled, etc.) does not have a information issuer final issuer destination of the portion to be controlled being an object of control controlled (e.g. ID (identification information) of the portion to be controlled, etc.)

This information control system is configured by comprising an information device having a plurality of portions to be controlled, an interface for connecting the information device to a control device as later described below, and a plurality of control devices each of which belongs to its relevant user.

In this information control system, the information device and the control device, each of which has such a structure as described below, are connected with each other via communication means capable of bidirectional transmission of information to thereby form a network. Various information such as data or control signals are transmitted or received through this network.

In this information control system, it is arranged that, when the control device makes the control request after the controlled-portion of the information device which is desired to be controlled has been selected via the control means, that the system is fully equipped with such a structure as enables controlling the selected portion to be controlled, by providing the information device and the control device with such a structure as described below. That structure to enable the controlling will be described below in detail.

To begin with, it is assumed that each of the information device and control device is equipped with a device-peculiar information memory that retains information being peculiar to the respective devices. As an example of this device-peculiar information memory, there is cited a configuration ROM which is prescribed in P1212, Draft Standard for a Control and Status Registers (CSR) Architecture for microcomputer buses being a standard for a communication format. In this device-peculiar information memory, it is arranged that the following three information items are retained. Firstly, a vendor name that is information on a vendor indicating a name of maker which has manufactured the information device, secondly, a model name that is information on a model of the information device, and thirdly, information for identifying the device, such as an icon that is image information on the information device.

For example, according to an IEEE 1394 format, in the configuration ROM (Read Only Memory) of the device is stored information peculiar to the device.

Moreover, each of the information device and control device is assumed to be equipped with device-peculiar information acquirement means for acquiring the device-peculiar information from the device-peculiar information memory as described above. As an example of this device-peculiar information acquirement means there is cited an asynchronous read request. It is prescribed in P1394 Standard for a High Performance Serial Bus that is a standard for communication format.

Furthermore, each of the information device and control devices is assumed to be equipped with means for acquiring information on the devices at the time of initializing the network connected using this device-peculiar information acquirement means.

This allows, at the time of initializing the network, every connected node to acquire information on any connected device by reading the configuration ROM.

Moreover, the control device is equipped with information device notification means which notifies information obtained by the device-peculiar information acquirement means to a user who wants to control the portion to be controlled (hereinafter referred to simply as "the user"). As an example of this information device notification means, there is cited a GUI (Graphical User Interface).

Furthermore, the control device is equipped with information device selection means for selecting the information device having a portion to be controlled which the user wants to control, from the information on the information device given by the information device notification means.

This allows, the control device to select an icon on a monitor through the GUI and using remote commander. The control device can thereby select the information device having a portion to be controlled which the user wants to control.

In addition, the information device includes controlled-portion notification means for notifying information on the portion to be controlled to the control device via communication means. As an example of the controlled-portion notification means, there is cited a panel prescribed in AV/C command (AV/C Panel Subunit Model and Command Set).

This enables the information device provide information for acquiring information on the portion to be controlled to the control device.

For example, in a case where the interface is based on the IEEE 1394 format and the device is controllable using the AV/C command, the device has information of "subunit type" which indicates the function of the device.

In this connection, a word "unit" means a digital device itself, while the word "subunit" means what takes charge of functions of the digital device. Accordingly, a combination of the subunits forms a unit. It is suitably determined by what function the interior of the unit is divided.

For example, as regards the digital devices a combination of a tuner subunit (receiving function) and a monitor subunits considered that a digital television (DTV) unit has. Also, for a television-integrated video tape recorder unit, a combination of a tuner subunit (receiving function), a monitor subunit, and a tape recorder/player sub nit (recording function/playback function) is considered. Also, for a hard disc (HDD) unit, a combination of a hard disk recorder/player subunit (recording/playback function) is considered Also, for a digital versatile disc (DVD) unit, a combination of a digital versatile disc recorder/player subunit (recording function/playback function) is considered. In this manner, suitable subunits are determined as these functional units.

It is noted that the above-mentioned subunits are imaginary functional units and therefore are not always in coincidence with actual circuit structures. It is also noted that some circuits fall outside the category of any subunits, such as a decoder block which is not needed to be controlled by the AV/C command.

In addition, each of the information device and control device is assumed to be equipped with a controlled-portion transmission selection means as follows. When selecting the portion to be controlled based on information supplied by the controlled-portion notification means, the control device notifies the user's selected operation information as a control request to the information device via the communication means. The information device having received it interprets according to the controlled-portion notification means what kind of operation has been performed to realize the selection of the controlled-portion. That is to say, it is assumed that each of the information device and control device has such controlled-portion transmission selection means for realizing the selection of the controlled-portion. It is further to be noted that, thereafter, the information device updates the controlled-portion notification means in response to the user's operation. As an example of the controlled-portion transmission selection means, there is cited a passthrough command, which is prescribed in the AV/C commands (AV/C Panel Subunit Model and Command Set).

Also, it is assumed that when the control device transmits a control request given by the user, to the information device as a request to control via the communication means, the information device that has received the control request controls the portion to be controlled. controlled-portion transmission control the portion to be controlled. That is to say, each of the information device and control devices is assumed to have such controlled-portion transmission control means as controls the portion to be controlled. As an example of the controlled-portion transmission control means, there is cited the passthrough command which is prescribed in the AV/C command (AV/C Panel Subunit Model and Command Set). This passthrough command is given in a unified form to the information device having a plurality of portions to be controlled.

Furthermore, the control device is assumed to have such structure that, when the controlled-portion transmission selection means or the controlled-portion transmission control means is executed, the control device identification information of the control device itself (hereinafter referred to as "the selection/identification information") to the selection request or control request made via the communication means. As an example of the selection/identification information, there is cited a source ID which is indicated by two consecutive bits as counted from the 33rd bit contained in the 1394 packet header of an asynchronous packet.

In addition, the information device is assumed to be equipped with the following preserving means. The preserving means can preserve the following two kinds of identification information in corresponding relationship to each other. One is the identification information on the selected portion to be controlled (hereinafter referred to as "the portion to be selected portion identification information") which the information device can acquire by means of the controlled-portion transmission selection means. The other is the selector/identification information which the information device receives from the control device. What is brought into correspondence preserved in this way each other is hereinafter called "the control correspondence table".

Moreover, the information device is arranged to have such control means as, when receiving the controlled-portion transmission control means from the control device, controls the controlled-portion made to correspond to the issuer of the controlled-portion transmission control means by referring to the control correspondence table.

Furthermore, the control device is arranged to have such a structure as can provide information device selection means to the user at any time.

Also, each of the information device and control device is arranged to have such structure that, when selecting the information device by the information device selection means this selected information is transmitted to the information device and thereby, a call is made of the controlled-portion notification means.

Because each of the information device and control device has the above-mentioned structures, this information control system has the following advantage. Particularly, even in case there are a plurality of portions to be controlled and even if means for controlling the portions to be controlled (e.g. a control command for the portion to be controlled, etc.) holds no information on a final destination of the portion to be controlled being an object of control (e.g. the ID of the portion to be controlled, etc.), it is possible to realize the control of the one portion to be controlled which is desired to be controlled.

As described above, in this information control system, the information device has such structure as can preserve the control correspondence table. As a result of this, the information device can refer to the control correspondence table on receipt of the control requests from a plurality of control devices. Therefore, the information apparatus can detect the portion to be controlled which is associated with the control device and decide that the detected portion is the portion which the control device desires to control. The information device can thus make that controlled-portion operate properly.

### [Basic operation]

The information control system configured in this way operates as follows.

When the information device and a plurality of control devices are connected via communication means to form a network and the network is initialized, each of the devices each of them acquires information on the other devices forming the network using the device-peculiar information acquirement means.

When the user controls the information device through the control device, the user calls the information device notification means. Uses the information device selection means, and selects the information device which the user desires to control.

On this occasion, the controlled-portion notification means is called. The user uses the controlled-portion transmission selection means, with the result that the controlled-portion which the user wants to control through the control device is selected.

Simultaneously with this, the controlled-portion transmission selection means is executed, so that, the selector identification information is supplied to the information device. Simultaneously with this, the controlled-portion transmission selection means is executed, so that, the information device acquires the selected portion identification information. Simultaneously with this, the information device makes the selector identification information and the selected portion identification information correspond to each other. Then, the information device preserves the both identification information as the control correspondence table.

Thereafter, when issuing the request to control the portion to be controlled is issued through the control device by the controlled-portion transmission control means, this is followed by the subsequent operation. The information device having received that control request refers to the identification information on the device having issued that controlled-portion transmission control means and the control correspondence table. Then, the information device gives an effect of the controlled-portion transmission control means on the portion that has been found as having the correspondence.

### [Specific configuration example]

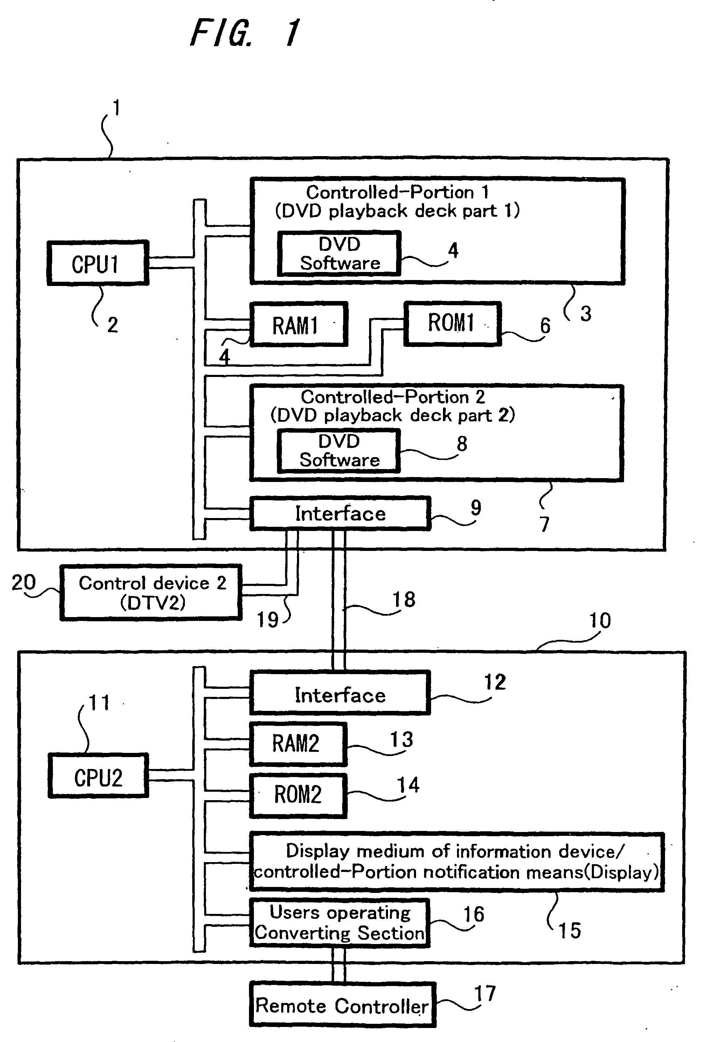

FIG. 1 is a diagram illustrating the configuration of the information control system to which the present invention is applied.

This information control system includes, as its control device, a control device 1 (DTV1) (10) having an IEEE 1394 interface 12 and a control device 2 (DTV2) (20). It also includes an information device (DVD player) 1 having an IEEE 1394 interface 9. It uses an IEEE 1394 interface method as communication means 18 and 19. Additionally, although not illustrated, the control device 2 (DTV2) (20) has the same structure as that of the control device 1 (DTV1) (10) which will be described below.

Here, an explanation will be given of the IEEE1394 interface which is utilized in the present information control system.

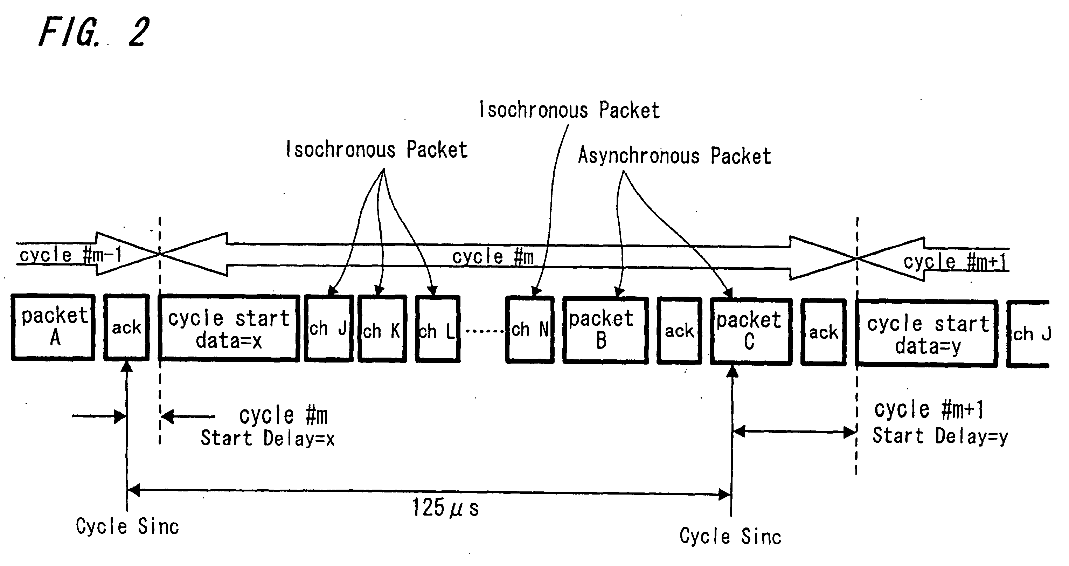

FIG. 2 is a diagram illustrating a cycle structure of data transmission between the devices connected by means of the IEEE1394 type bus. In the IEEE1394, the data is divided into packets and it is time-divisionally transmitted on a basis of 125 µs length cycle. This cycle is produced by a cycle start signal supplied from a node (any one of the devices connected to the bus) which has a cycle master function. An isochronous packet secures a band which is necessary for its transmission and that is measured from the head of every cycle (it is called "a band" although it is a unit of time length). Therefore, in the isochronous transmission, the transmission of data within a fixed length of time is guaranteed. However, in case transmission error has occurred, there are no structures for protection of the data, so that the data is lost. In an asynchronous transmission which is performed during a time length of each cycle not used for the isochronous transmission and in which the node having ensured therefor the bus as a result of arbitration sends out an asynchronous packet, it is possible to execute an acknowledge / retry process, so that,reliable transmission is guaranteed. However, transmission timings will not become definite.

In order that a prescribed node performs isochronous transmission, the node must be compatible with the isochronous function. In addition, at least one of the nodes compatible with the isochronous function must have a cycle mater function. Further, at least one of the nodes connected to the IEEE1394 serial bus 9-1 to 9-4 must have an isochronous resource manager function.

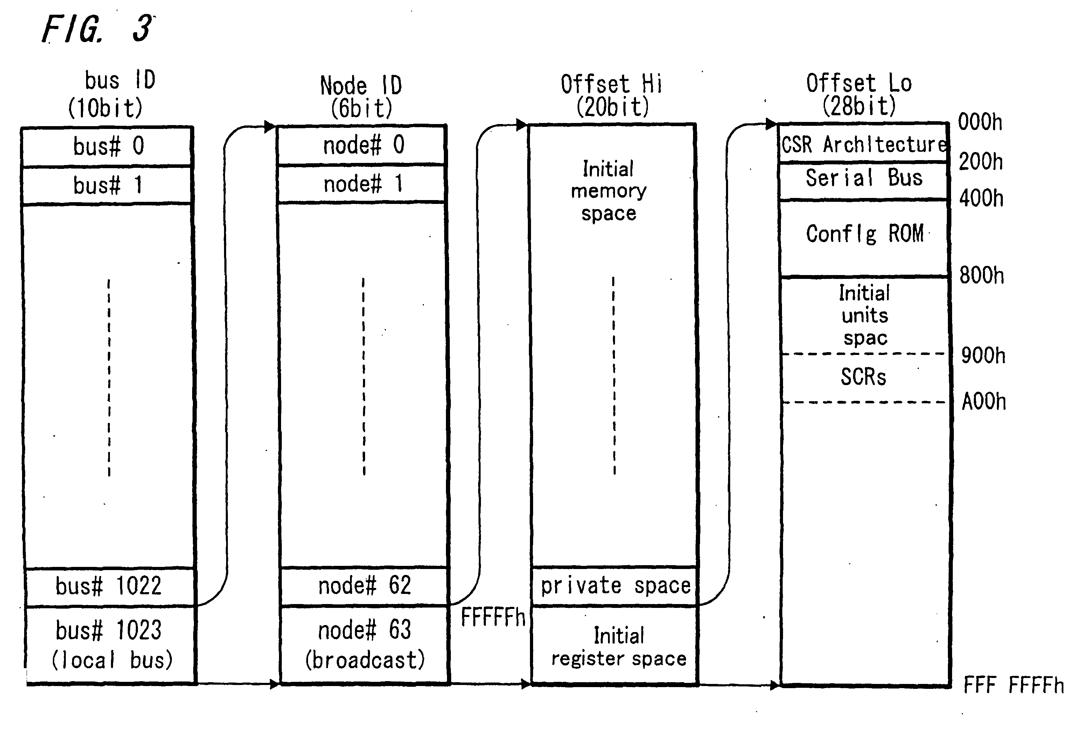

IEEE1394 is based on a CSR (Control and Status Register) architecture which has a 64 bit address space prescribed in ISO / IEC13213. FIG. 3 is a diagram illustrating the structure of the address space of the CSR architecture. The upper 16 bits are node IDs which represent nodes on the respective IEEE1394s. The remaining 48 bits are used for designating the address space which is given to the respective nodes. The upper-order 16 bits are further classified into 10 bits for bus ID's and 6 bits for physical ID's (the node ID's in a narrow sense). Because a value in which every bit is "1" is used for special purposes, the upper 16 bits can designate 1023 pieces of bus and 63 pieces of node.

The space defined by upper 20 bits out of the 256-thereabout address space defined by the lower 48 bits is divided into the followings. An initial register space (Initial Register Space) used for peculiar 2046-byte register, for CSR- peculiar IEEE1394 register and the like, a private space, an initial memory space and so on. The space defined by the lower 28 bits, in case the space defined by the upper 20 bits thereof is the initial register space, is used as a configuration ROM (Read Only Memory), an initial unit space used for peculiar applications, a plug control register (PCRs), and so on.

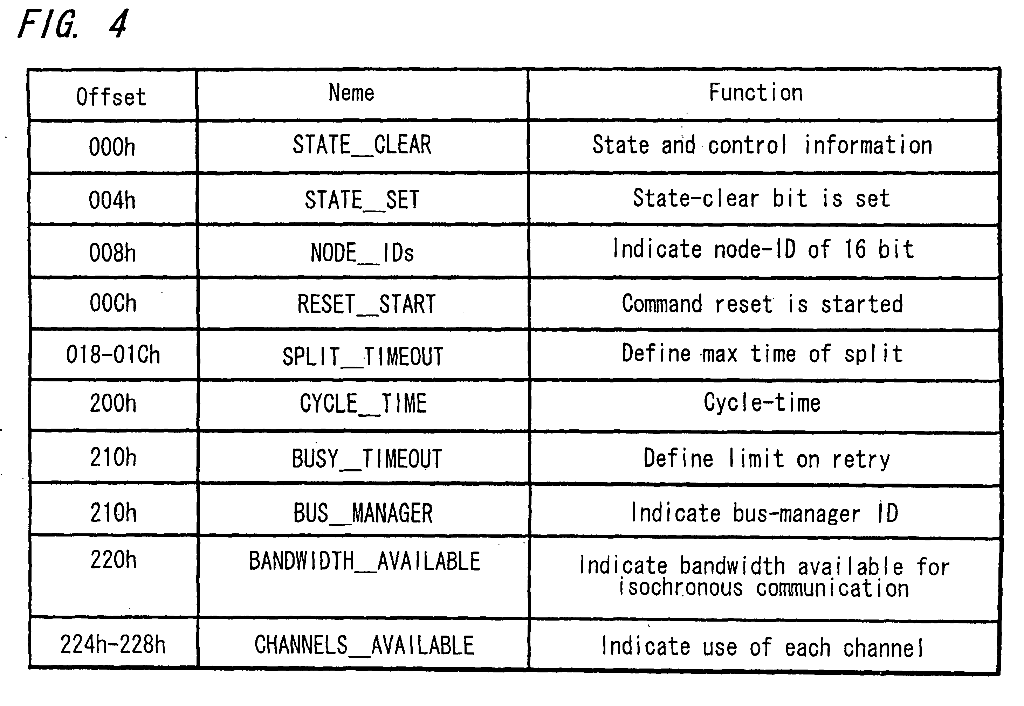

FIG. 4 is a diagram illustrating offset addresses, names, and functions of principal CSR s. The "offset" in FIG. 4 represents the offset addresses from the address "FFFFF0000000h (the numeral with "h" at its end is what is expressed by the hexadecimal rotation) at which the initial register space begins. The bandwidth available register having the offset address 220h represents bands which can be assigned to the isochronous communication. Only a value of the node which is operating as the isochronous resource manager is handled as being effective. While each node has the CSR of FIG. 3, as regards the bandwidth available register, only the isochronous resource manager has is handled being an effective. In other words, the bandwidth available register is substantially possessed by the isochronous resource manager only. In the bandwidth available register there is preserved a maximum value in case no bands is assigned to the isochronous communication. Each time any band is assigned thereto, the value decreases.

As regards a channels available register that corresponding to the offset addresses 224h to 228h, each bit thereof corresponds to each of channel numbers from #0 to #63. In case the bit has a value of "0", it indicates that the relevant channel has already been assigned. Only the channels available register of the node operating as the isochronous resource manager is effective.

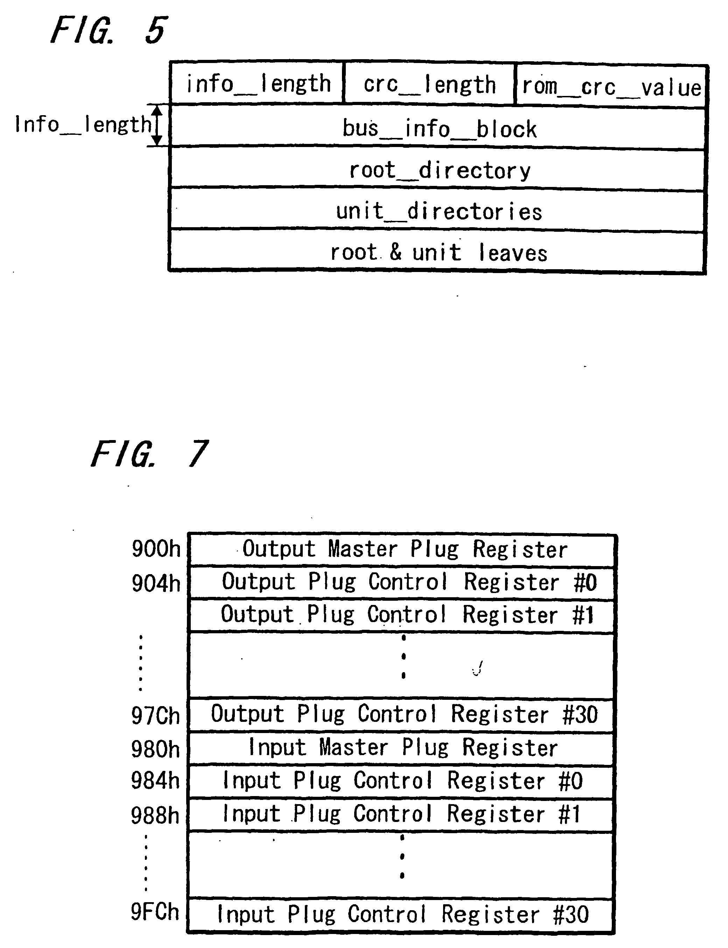

Referring back to FIG. 3, in the addresses 200h to 400h within the initial register space, there is assigned a configuration ROM based on a general ROM (Read Only Memory) format. FIG. 5 is a diagram illustrating the general ROM format. The node which is a unit of access on the IEEE1394 can have therein a plurality of units each of which independently operates while commonly using the address space. Unit directories can indicate the version and position of software for in that unit. Although the positions of bus info block and root directory are made fixed, the positions of the other blocks are designated by the offset addresses.

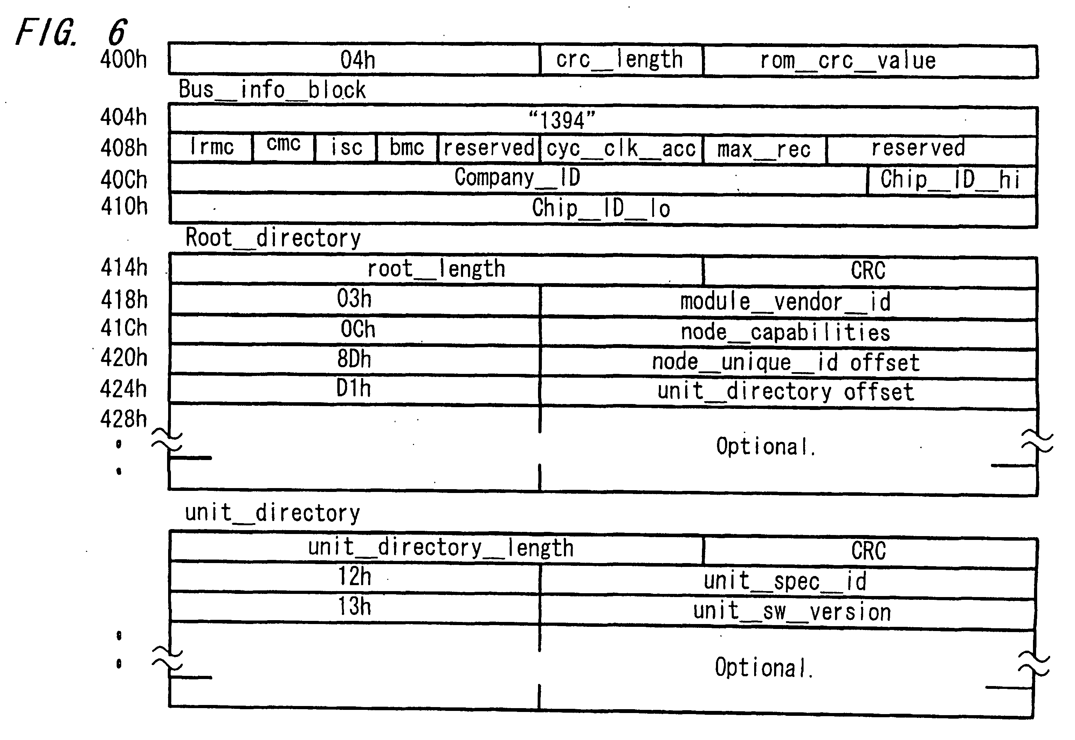

FIG. 6 is a diagram illustrating the details of the bus info block, root directory, and unit directory. In a "Company ID" inside the bus info block there is stored an ID number which indicates the manufacturer of device. In a "Chip ID" is stored a world-unique ID which is peculiar to the device without its duplication on those of the other devices. According to the IEC 61833 standard, in a unit directory of the apparatus that satisfies the IEC61883, at the first octet, second octet, and third octet of a "unit spec ID" thereof are written 00h, Aoh, and 2Dh, respectively. Further, in a unit switch version (unit sw version), at the first octet thereof and at the LSB (Least Significant Bit) of the third octet thereof are written 01h and 1, respectively.

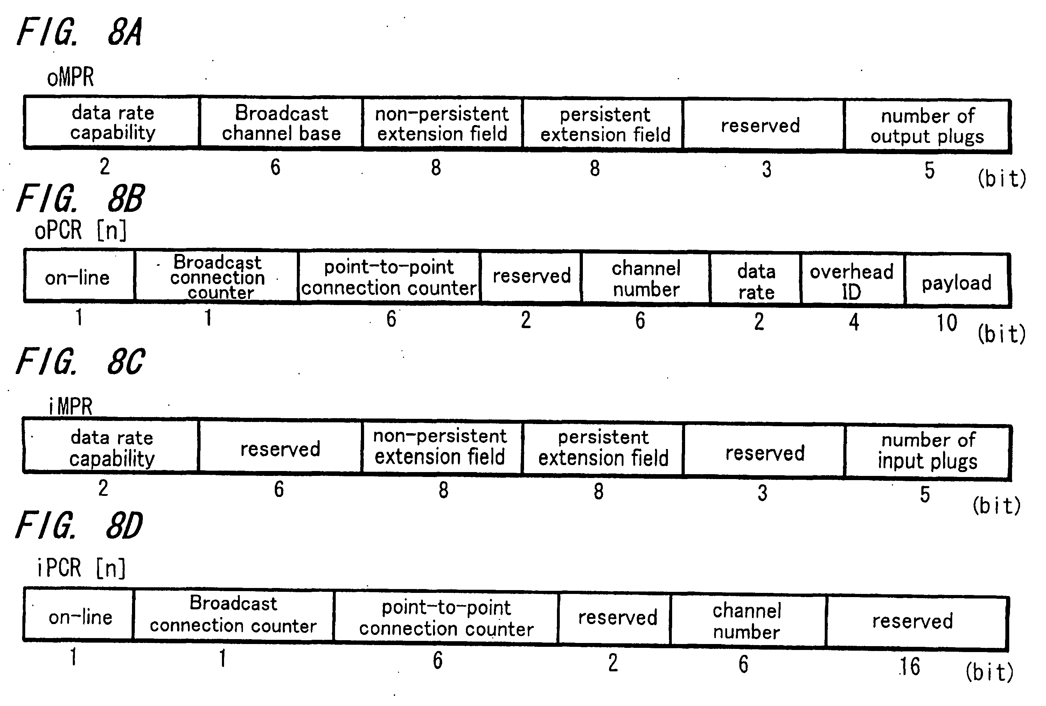

In order to control the input / output of the device via the interface, the node has a PCR (Plug Control Register) prescribed under the IEC61883 in the addresses 900h to 9FFh within the initial unit space of FIG. 3. This is what the concept "plug" is substantiated by making the interface have such registers for forming a signal path which has logical similarity to the analog interface. FIG. 7 is a diagram illustrating the construction of the PCR. The PCR has an oPCR (output Plug Control Register) which represents an output plug and an iPCR (input Plug Control Register) which represents an input plug. Also, the PCR has a register oMPR (output Master Plug Register) indicating the information on the output plug peculiar to each apparatus and a register iMPR (input Master Plug Register) indicating the information on the input plug peculiar to each device. Although each device has the possibility of having neither a plurality of oMPR nor a plurality of iMPR, it can have a plurality of oPCRs and iPCRs corresponding to its individual plugs according to its capability. The PCR illustrated in FIG. 7 has 31 pieces of oPCR's and 31 pieces of iPCR's. The flow of the isochronous data is controlled by operating the registers corresponding to these plugs.

Figs. 8A to 8D are diagrams illustrating the constructions of oMPR, oPCR, iMPR, and iPCR. FIG. 8A illustrates the construction of oMPR; FIG. 8B illustrates the construction of oPCR; FIG. 8C illustrates the construction of iMPR; and FIG. 8D illustrates the construction of iPCR. In a 2 bit area of "data rate capability" on the MSB side in each of the oMPR and iMPR is stored a code which represents a maximum transmission rate for the isochronous data that the relevant device can transmit or receive. The "broadcast channel base" in the oMPR prescribes a number of a channel which is used for the broadcast output.

A 5 bit area of "number of output plugs" on the LSB side of the oMPR stores therein a value which represents the number of the output plugs possessed by the relevant device has, i.e. the number of oPCRs. A 5 bit area of "number of input plugs" on the LSB side of the iMPR stores therein the number of the input plugs the relevant device, i.e. the number of iPCRs. Areas of "non-persistent extension field" and "persistent extension field" are for future extension.

An area of the MSB "on-line"in each of the oPCR and iPCR represents the state of use of the plug. To be specific, a value 1 thereof indicates that, the relevant plug is ON-LINE. A value of 0 thereof indicates that the plug is OFF-LINE. A value of"broadcast connection counter (broadcast connection counter)" in each of the oPCR and iPCR represents the presence (1) or absence (0) of the broadcast connection. A value of "point-to-point connection counter" having a with 6 bit width in each of the oPCR and iPCR has represents the number of the point-to-point connections possessed by the relevant plug has.

A value of "channel number having a 6 bit width in each of the oPCR and iPCR represents a number of a isochronous channel to which the relevant plug is connected. A value of "data rate" having a 2 bit width in the oPCR represents the real transmission rate of the packet of the isochronous data outputted from that plug. A code which is stored in "overhead ID" having a 4 bit width in the oPCR represents an over bandwidth of the isochronous communication. A value of "payload " having a 10 bit width in the oPCR represents the maximum value of data contained in the isochronous packet which can be handled by the relevant plug.

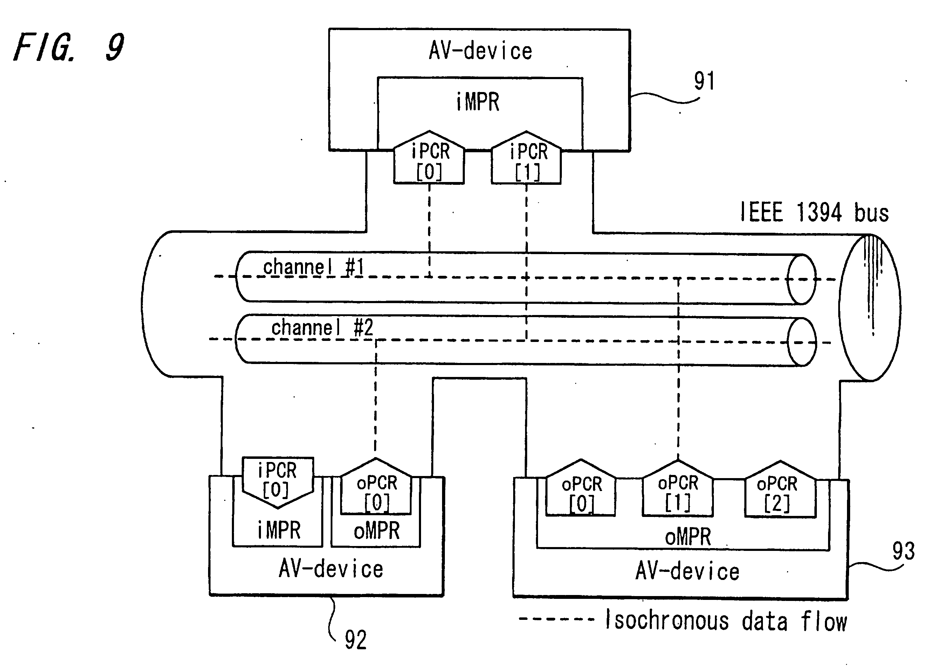

FIG. 9 is a diagram illustrating the relationship among the plug, plug control register, and isochronous channel. AV devices 91 to 93 are connected to each other through the use of the IEEE1394 serial bus. Of the oPCR [0] to oPCR [2] of which transmission rate and the number of oPCR are determined by the oMPR of the AV device 93, isochronous data whose channel is designated by the oPCR [1] is sent out to a channel #1 of the IEEE1394 serial bus. Of the iPCR [0] and iPCR [1] whose transmission rate and the number of iPCR are determined by the iMPR of the AV devices 91, the AV device 91 reads in the isochronous data sent out into the channel #1 of the IEEE1394 serial bus by the iPCR [0] having the transmission rate of the input channel #1. Similarly, the AV device 92 sends out the isochronous data a channel #2 designated by the oPCR [0]. The AV device 91 reads in that isochronous data from the channel #2 designated by the iPCR [1].

In this way, data transmission is performed between the device which are connected to each other through the IEEE1394 serial bus. In the system of this embodiment is utilized the AV/C command set which is prescribed as commands for controlling the apparatuses connected to each other via the IEEE1394 serial bus. The system is arranged to control each device, or estimate the status of each device using AV/C command set. Next, a description will be given of this AV/C command set.

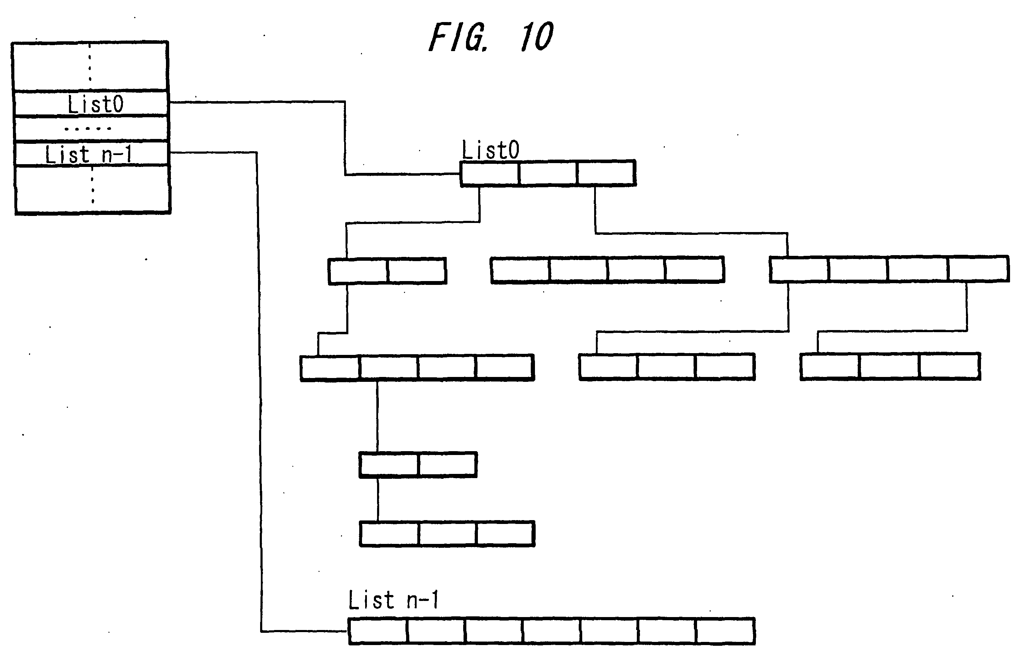

First of all, the data structure of the Subunit Identifier Descriptor in the AV/C command set used in the system of this embodiment will be described with reference to Figs. 10 to 13. FIG. 10 illustrates the data structure of the Subunit Identifier Descriptor. The subunit identifier Descriptor is formed by lists of a hierarchical structure as illustrated in FIG. 10. The "list" represents, for example, a channel capable of receiving if the relevant item is a tuner, and represents a music, etc. recorded in a disc if the relevant item is a disc. The lists in the uppermost-order layer of the hierarchical structure are called "the root lists". For example, the list 0 forms a root list for its lower lists. The list 2 to list (n-1) also form root lists. The root list exist as many as objects. The "object" herein means, for example, each channel, etc. in the digital broadcast when the AV device is a tuner. All the lists in one layer of the hierarchy share common information.

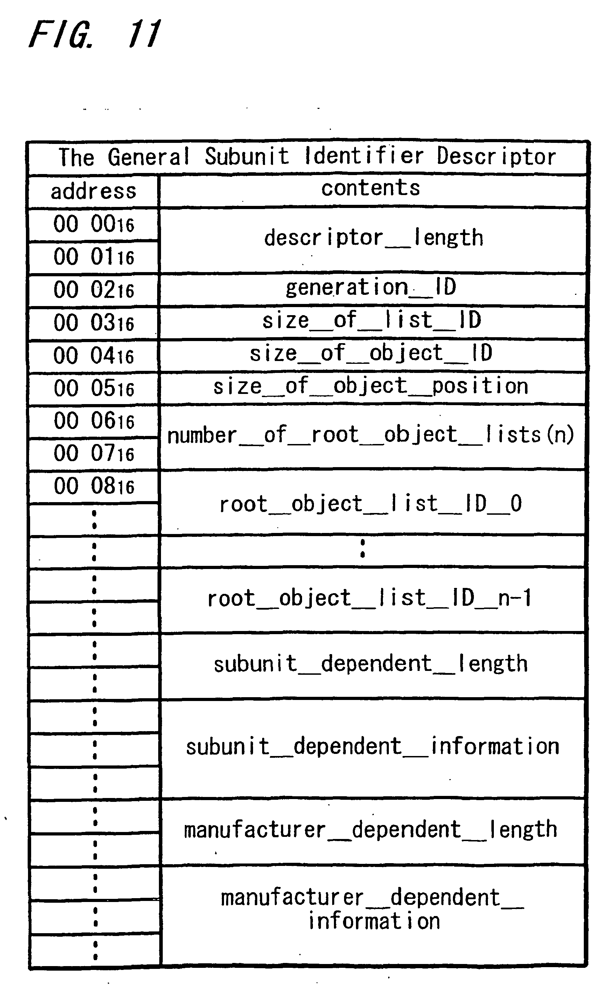

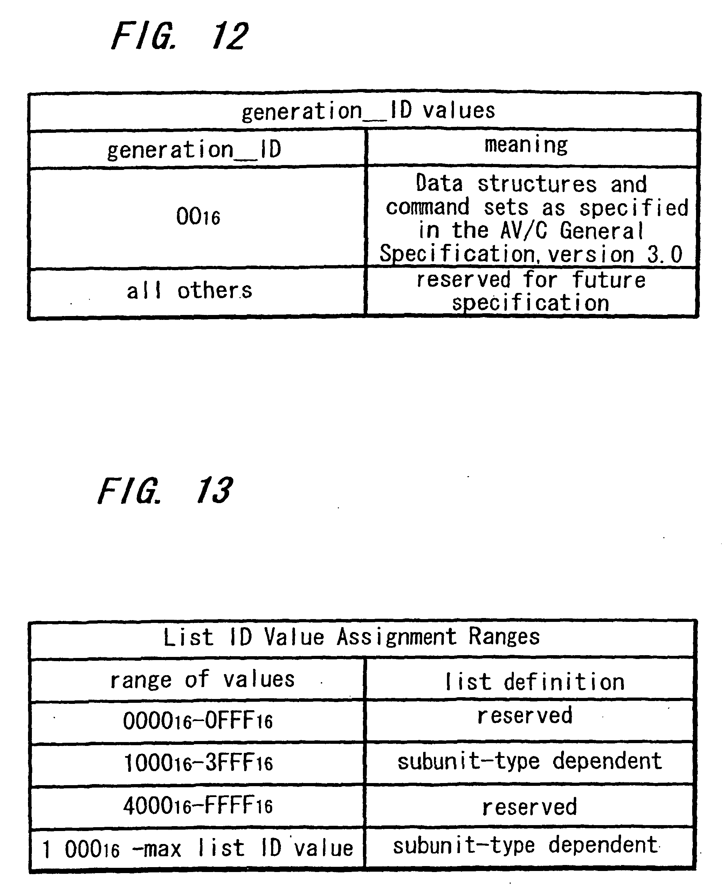

FIG. 11 illustrates the format of "The General Subunit Identifier Descriptor" which is used in existing systems. The "Subunit Identifier Descriptor 41" has contents in which attribute information on functions is described. It does not include a value of a descriptor length field itself. A "generation ID" represents the version of the AV/C command set. As illustrated in FIG. 12, its value is at present "00h" ("h" expresses the hexadecimal representation). This "00h" means that data structures and command sets are version 3.0 of the "AV/C General Specification. Also, as illustrated in FIG. 12, all other values than the value "00h" are reserved for future specification.

A "size of list ID" represents the number of bytes in a list ID. A "size of object ID" represents the number of bytes in an object ID. A "size of object position" represents the position in the list (the number of bytes) which is used in case referred to when performing the control. A "number of root object lists" represents the number of root object lists. A "root object list id" represents an ID for identifying the uppermost root object lists in the respective independent hierarchies.

A "subunit dependent length" represents the number of bytes in the succeeding "subunit dependent information" field. The "subunit dependent information" is a field which indicates information peculiar to the relevant function. A "manufacturer dependent length" indicates the number of bytes in the succeeding "manufacturer dependent information" field. The "manufacturer dependent information" is a field which indicates specification information on the relevant vendor (maker). It is noted that when the descriptor has no "manufacturer dependent information", this field does not exist.

FIG. 13 illustrates the assignment ranges of the list IDs illustrated in FIG. 11. As illustrated in FIG. 13, the ranges "0000h to 0FFFh" and "4000h to FFFFh" each are reserved as the assignment ranges for future specification. "1000h to 3FFFh" and "10000h to max list ID value"are prepared for identifying dependent information on the subunit type.

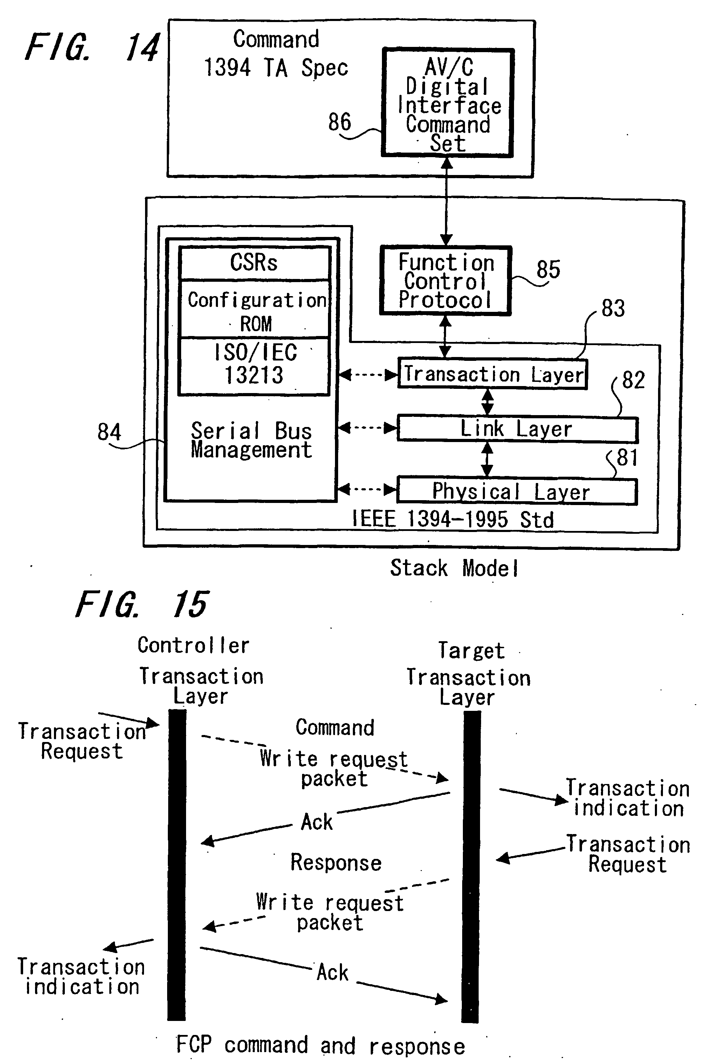

Next, the AV/C command set used in the system of this embodiment will be described with reference to Figs. 14 to 19. FIG. 14 illustrates a stack model of the AV/C command set. As illustrated in FIG. 14, a physical layer 81, link layer 82, transaction layer 83, and serial bus management 84 are based on the IEEE1394. An FCP (Function Control Protocol) 85 is based on the IEC61883. An AV/C command set 86 is based on the 1394TA spec.

FIG. 15 is a diagram illustrating the command and response of the FCP85 in FIG. 14. The FCP is a protocol for controlling the AV apparatus under the IEEE1394. As illustrated in FIG. 15, the controlling side is a controller while the controlled side is a target. The transmission of a FCP command or the response thereto is performed between the nodes using a write transaction during the asynchronous communication under the IEEE1394 standard. The target which receives data returns an acknowledge (ACK) signal to the controller for confirmation of that reception.

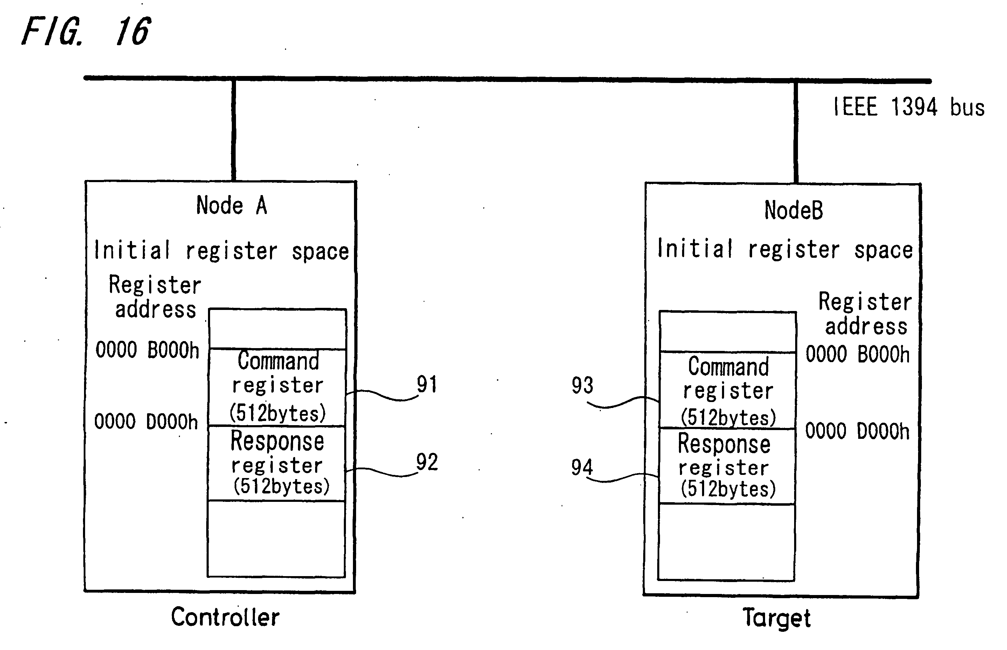

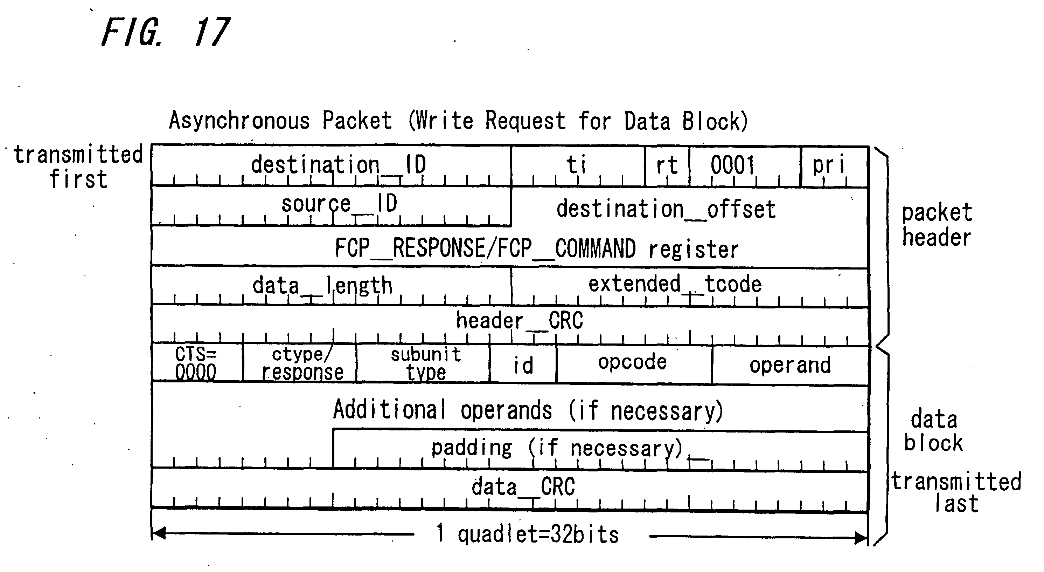

FIG. 16 is a diagram illustrating in more detail the relationship between the command and response of FCP illustrated in FIG. 15. A node A and a node B are connected to each other via the IEEE1394 bus. The node A is the controller and the node B is the target. In each of the nodes A and B a command register and a response register each having are 512 bytes prepared each. As illustrated in FIG. 16, the controller writes a command message into the command register 93 of the target and thereby transmits a relevant command. Also, conversely, the target writes a response message into the response register 92 of the controller and it thereby transmits a relevant response. For these two messages, exchange of control information is performed. The kind of the command set which is sent by the FCP are described in an area "CTS" in the data field of FIG. 17 as later described below.

FIG. 17 illustrates the data structure of the packets which are transmitted in the asynchronous transmission mode of the AV/C command. The AV/C command set is the one for controlling the AV device in which CTS (the command set ID) = "0000". The AV/C command frame and response frame are transmitted / received between the nodes through the use of the FCP. In order to cause no burden on the bus and AV device, it is designed that the response to the command is made within a time length of 100 ms. As illustrated in FIG. 17, the data of the asynchronous packet is comprised of 32 bits (=1 quadlet) in the horizontal direction. The upper stage in the figure represents a header part, while the lower stage thereof represents a data block. An area "destination_ID" indicates the relevant destination.

The "CTS" represents the ID of the command set. In case of the AV/C command set, the CTS = "0000". When the packet is a command, a "ctype / response" field indicates the functional classification of that command and. When the packet is a response, the "ctype / response" field indicates the processed results of the relevant command. The commands are roughly classified into the following four kinds of definitions. (1) commands for controlling the functions from the outside (CONTROL), (2) commands for inquiring about the relevant status from the outside (STATUS), (3) commands for inquiring from the outside about the presence or absence of supporting the relevant control command (GENERAL INQUIRY (the presence or absence of the for-use-for-support opcode)) and (SPECIFIC INQUIRY (the presence or absence of supporting opcode and operands)), and (4) commands for requesting to notify a change in the status to be notified to the outside (NOTIFY).

A response is returned depending on to the kind of command. The response to the "CONTROL" command includes "NOT IMPLEMENTED", "ACCEPTED", "REJECTED", and "INTERIM". The response to the "STATUS" command includes "NOT IMPLEMENTED","REJECTED", "IN TRANSITION", or "STABLE". The response to the "GENERAL INQUIRY" / "SPECIFIC INQUIRY" commands is "IMPLEMENTED" and "NOT IMPLEMENTED". The response to the "NOTIFY" command includes "NOT IMPLEMENTED", " REJECTED, "INTERIM", and "CHANGED".

A "subunit type" area is provided for specifying the functions within the device and, for example, a tape recorder / player, a tuner, etc area assigned therein. To distinguish between the subunits if there are a plurality of subunits of the same kind, addressing is performed using the subunit ids as identification numbers. The "opcode" represents commands while the "operand" represents the parameters of each command.
"Additional operands" is a field which is added if necessary. A field "padding" is also what is added if necessary. A field "data CRC (Cyclic Redundancy Check)" is used for error check in data transmission.

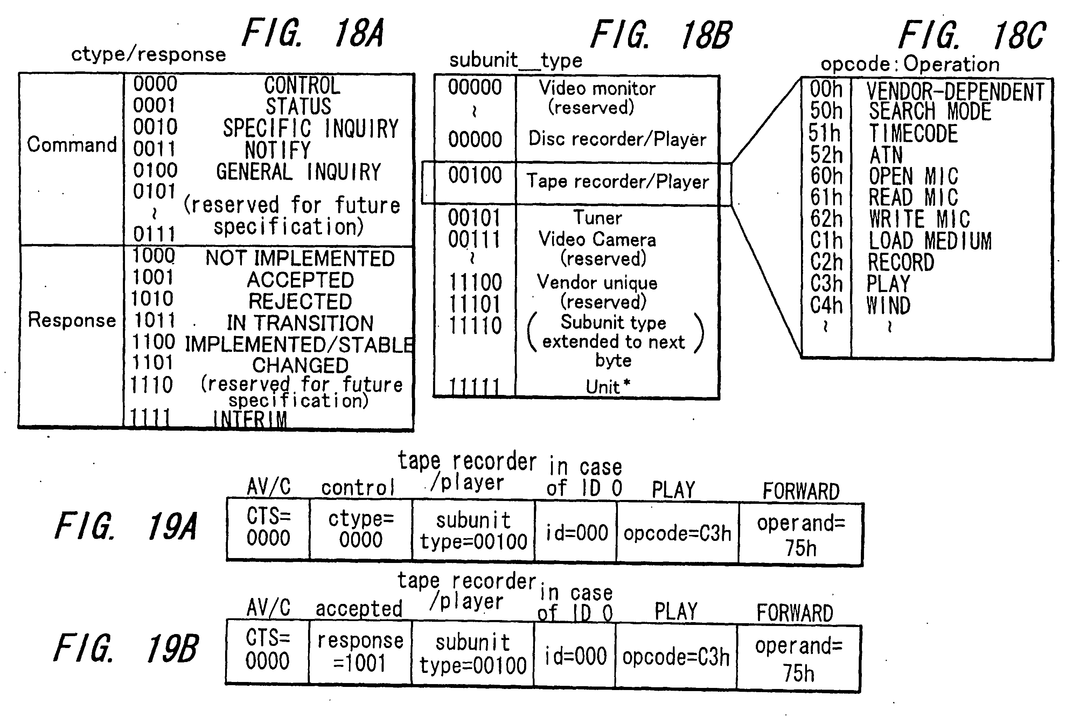

FIGS. 18A to 18C illustrate specific examples of the AV/C commands. FIG. 18A illustrates specific examples of the "ctype / response" field. The upper stage in the figure represents commands while the lower stage therein represents in responses. "0000" is assigned the command "CONTROL". In "0001" is assigned the command "STATUS". In "0010" is assigned thereto the command "SPECIFIC INQUIRY". In "0011" is assigned thereto the command "NOTIFY". In "0100" is assigned thereto the command "GENERAL INQUIRY". "0101" to "0111" are reserved for future specification. Also, in "1000" is assigned the response "NOT IMPLEMENTED". In "1001" is assigned the response "ACCEPTED". In "1010" is assigned the response "REJECTED". In "1011" is assigned the response "IN TRANSITION". "1101 the response "CHANGED". "1100" the response "IMPLEMENTED / STABLE". In "1111" is assigned the response "INTERIM". "1110" is reserved for future specification.

FIG. 18B illustrates specific examples of the "subunit type". In "00000", "00011", "00100", "00101", "00111", "11100", and "11110" are assigned "Video Monitor", "Disc recorder / Player", "Tape recorder / Player", "Tuner", "Video Camera", "Vendor unique", and "Subunit type extended to next byte", respectively. Additionally, although has "unit" is assigned in "11111", this is used in case it is sent to the apparatus itself. An example thereof is "on" or "off" of the power supply.

FIG. 18C illustrates specific examples of the "opcode" commands. For each subunit type there exists an "opcode" table. Herein, there is illustrated the "opcode" table when the subunit type is "Tape recorder / Player". For each opcde, operand is defined. In the op codes "00h", "50h", "51h", "52h", "60h", "61h", "62h", "C1h", "C2h", "C3h", and "C4h" are herein assigned the operands "VENDOR-DEPENDENT", "SEARCH MODE", "TIMECODE", "ATN", "OPEN MIC", "READ MIC", "WRITE MIC", "LOAD MEDIUM", "RECORD", "PLAY", AND "WIND", respectively.

FIGS. 19A to 19B illustrate specific examples of the AV/C command and the response thereto. For example, when instructing a playing device as a target (consumer) on playback, the controller sends a command such as shown in FIG. 19A to the target. This command is CTS "0000" because of using the AV/C command set. Because the command (CONTROL) for controlling the device from the outside is used, ctype = "0000" (see FIG. 18A). Because the subunit type is "Tape recorder / Player", it is pre-determined that "subunit type" = "00100" (see FIG. 18B). "id" represents a case where it is ID0 and therefore id = 000. As regards the "opcode", it is "C3h which means the reproduction (see FIG. 18C). "operand" is "75h" which means "FORWARD". When played back, the target returns a response such as that shown in FIG. 19B to the controller. Because the response is herein "accepted" which means the acceptance, response = "1001" (see FIG. 18A). Except for the "response", others are the same as those in FIG. 19A. Therefore, the description will be omitted.

Referring to FIG. 1 again, it is assumed that the control device 1 (DTV1) (10), control device 2 (DTV2) (20), and information device (DVD player) 1 each have an asynchronous read request as the device-peculiar information acquirement means.

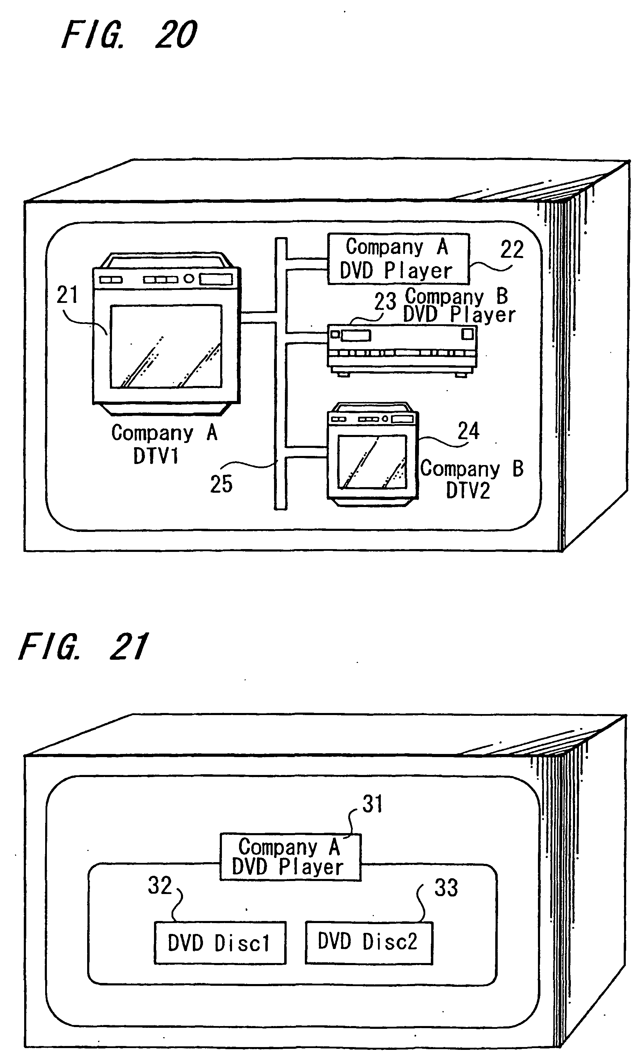

Also, it is assumed that the control device 1 (DTV1) (10) is equipped, as the information device notification means, with a GUI as illustrated in FIG. 20 (hereinafter referred to as "a device GUI") In FIG. 20, it is illustrated that the followings are connected via a network 25; company A DTV1 (21); company A DVD Player 22; company B DVD Player 23; and company B DTV2 (24).

Also, it is assumed that the information device (DVD player) 1 is equipped, as the controlled-portion notification means, with a GUI as that illustrated in FIG. 20 (hereinafter referred to as " a controlled-portion GUI") In FIG. 20, it is illustrated that a company A DVD Player 31 contains a DVD Disc 1 (32) and a DVD Disc 2 (33).

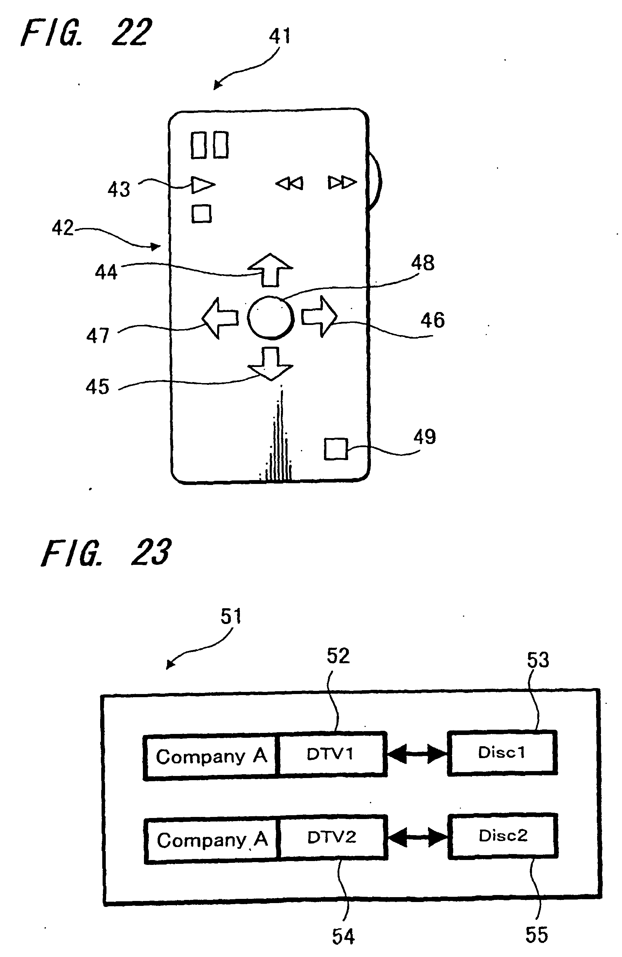

Specifically, when the company A DVD Player 22 in FIG. 20 is selected using a remote controller 41 illustrated in FIG. 22, it is indicated as shown in FIG. 21 that the company A DVD Player 31 has, as its subordinate sub-units, the DVD Disc 1 (32) and the DVD Disc 2 (33).

In FIG. 22, the remote controller 41 has control buttons 42 including a playback button 43, buttons for stop, fast forwarding, rewinding, and the like. It also has a selected object execution button 48 for executing an item selected by means of an upper button 44, lower button 45, right button 46, and left button 47. Further, it has an information device notification means display button 49 as described below.

Also, it is assumed that the control device (DTV1) (10) includes a display 15 which is a device for displaying the GUI serving as the information device notification means and controlled-portion notification means.

Moreover, the controlled-portion GUI possessed by the information device(DVD player) 1 is displayed as follows. A device is selected on the device GUI, and this selected information is transmitted to the information device (DVD player) 1. Then, the information device(DVD player) 1 produces data on the controlled-portion GUI, and transmits the data to the control device 1 (DTV1) (10). Thus, the controlled-portion GUI is displayed on the display 15 of the control device 1 (DTV1) (10).

The control device 1 (DTV1) (10) is equipped with the following user's operation converting section 16 as the controlled-portion transmission selection means and controlled-portion transmission control means. The user's operation converting section 16 receives information on the user's operation of the remote controller 17, interprets that operation and converts it into a pass-through command. The pass-through command is issued from the interface 12. This means the user's operation converting section 16 has a function of issuing such command.

Furthermore, the user's operation converting section 16 is arranged to have another function of displaying the device GUI when it receives a signal generated by the operation of the information device notification means display button 49 of the remote controller 41 shown in FIG. 22.

In addition, the user's operation converting section 16 is arranged to have another function of updating the device GUI. Specifically, when the device GUI is being displayed, if the section 16 receives the information resulting from the user's operation of the remote controller 17, it interprets that operation and updates the device GUI (rather than interpreting that user's operation and converting it into the pass-through command.

Moreover, the user's operation converting section 16 is arranged to have the following function. When a device GUI is being displayed and a device has been selected, if the section 16 has receives a signal resulting from the operation of the selected object execution button 48 of the remote controller 41 in FIG. 22, it transmits a request to display the controlled-portion GUI (hereinafter referred to as "the controlled-portion GUI display request") to the information device(DVD player) 1 via the interface 12.

Furthermore, the information device(DVD player) 1 is arranged to have the following function. When having received the controlled-portion GUI display request from the control device 1 (DTV1) (10), the information device 1 transmits data on the controlled-portion GUI to the control device 1 (DTV1) (10).

In addition, the control device (DTV1) (10) includes the following elements for making a display on the display 15 when receiving the data on the controlled-portion GUI. A CPU2 (11) for performing the control of that display, a ROM 2 (14) for storing a control program therefor, and a RAM 2 (13) for a working area.

Also, the information device (DVD player) 1 has a RAM 1 (5) storing a control correspondence table 51 in such form as illustrated in FIG. 23 as the control correspondence table. In FIG. 23, the control correspondence table 51 shows that a DVD Disc 1 (53) corresponds to a company A DTV 1 (52) and a DVD Disc 2 (55) corresponds to a company A DTV 2 (54).

Moreover, the information device (DVD player) 1 includes the following two DVD software playback deck parts. One is the DVD playback deck part 1 (3) capable of reproducing a DVD software 4 in which information on controlled-portion 1 is recorded. The other is the DVD playback deck part 2 (7) capable of reproducing DVD software 8 in which information on controlled-portion 2 is recorded.

Furthermore, the information device (DVD player) 1 includes the following elements so that, when having received a pass through command, the device can give an effect of the command on the controlled-portion corresponding to the issuer of the command by referring to the control correspondence table 51. A CPU 1 (2) for performing the control for that purpose, a ROM 1 (6) storing a control program therefor, and a RAM 1 (5) for a work area.

The operation will be described below.

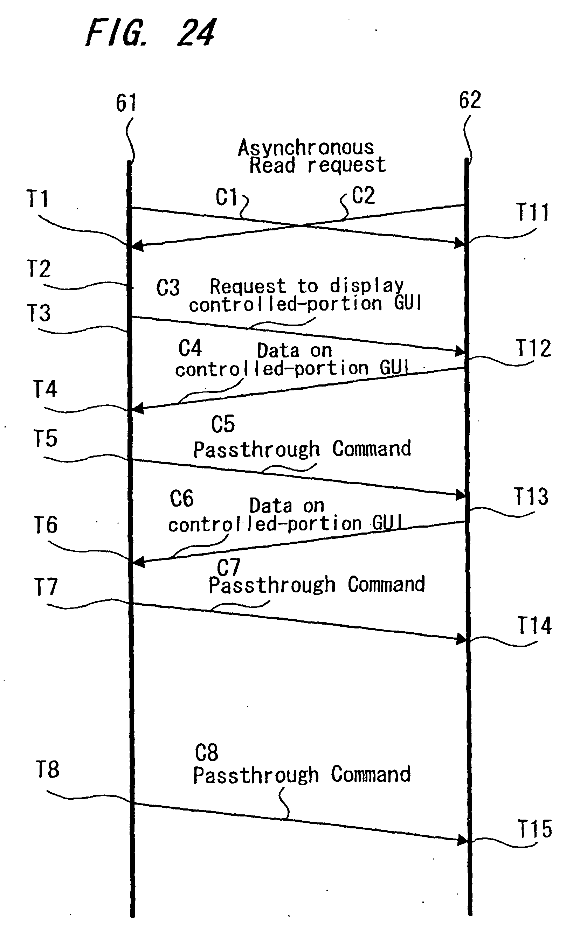

A control flow therefor is illustrated in FIG. 24.

Premising the above described points, the control device 61 and the information device 62 are connected first with each other via communication means in accordance with the IEEE 1394 communication format to form a network. In this case, it is assumed that the information device 62 is a DVD player, and the control device 61 includes a DTV1 and a DTV2.

Now, it assumed that the control device 61 issues the asynchronous read request C1 to the information device 62 and the information device 62 issues the asynchronous read request C2 to the control device 61. At a time point T1, the control device 61, gets the device-peculiar information on the information device 62 connected to the network and retains the acquired information in the RAM 2 (13) illustrated in FIG. 1. At a time point T11, the information device 62, acquires the device-peculiar information on the control device 61 connected to the network and retains the acquired information in the RAM 1 (5) illustrated in FIG. 1.

In case the user controls the DVD player of the information device 62 via the DTV 1 of the control device 61, the following operation is performed. When, in the DTV 1 of the control device 61, the information device notification means display button 49 of the remote controller 41 illustrated in FIG. 22 is operated, the signal due to that operation is transmitted to the user's operation converting section 16 of the DTV1 of FIG. 1. That signal is interpreted there. At a time point T2, the device GUI is displayed on the display 15.

When, in the DTV1 of the control device 61, by the operation of the upper button 44, lower button 45, right button 46, and left button 47 of the remote controller 41 of FIG. 22 is selected the DVD player of the information device 62 displayed on the device GUI, the following operation is performed. For each said selection, the signal due to this selecting operation is transmitted to the user's operation converting section 16 of the DTV1 illustrated in FIG. 1. That signal is interpreted there. Then, the device GUI on the display 15 is updated.

Next, when in the DTV1 of the control device 61, the selected object execution button 48 of the remote controller 41 of FIG. 22 is operated in a state where the DVD player of the information device 62 is selected, at a time point T3, the signal due to that selection is transmitted to the user's operation converting section 16 of the DTV1 illustrated in FIG. 1. That signal is interpreted there. Then, the controlled-portion GUI display request C3 is transmitted to the DVD player of the information device 62 via the interface 12.

At a time point T12, the DVD player of the information device 62 which has received the controlled-portion GUI display request C3 prepares controlled-portion GUI data C4. It then transmits the controlled-portion GUI data C4 to the DTV1 of the control device 61 via the interface 9.

At a time point T4, the DTV1 of the control device 61 based on the controlled-portion GUI data C4 received, makes a GUI display, at a point in time T4, of the GUI data of the controlled-portion on the display 15.

When, in the DTV1 of the control device 61, at a time point T5, the user performs his selecting operation using the upper button 44, lower button 45, right button 46, and left button 47 on the remote controller 41 of FIG. 4 and the DVD Disc 1 of the information device 62 displayed on the controlled-portion GUI is selected, each time that selecting operation, the signal due to the operation is transmitted to the user's operation converting section 16 of the DTV1 illustrated in FIG. 1. That signal is interpreted there. Then, the pass through command C5 corresponding to that signal is issued to the DVD player of the information device 62.

In response thereto, at a time point T13, the DVD player of the information device 62, prepares the controlled-portion GUI data C6. It then transmits the controlled-portion GUI data C6 to the DTV1 of the control device 61 via the interface 9.

At a time point T6, the DTV1 of the control device 61 updates the controlled-portion GUI on the display 15.

When, in the DTV1 of the control device 61, the user operates the selected object execution button 48 of the remote controller 41 of FIG. 22, in a state where the DVD Disc1 displayed on the portion-to-be-controlled GUI is selected at a point T7. Then, through this user's operation, the signal due to the operation is transmitted to the user's operation converting section 16 of the DTV1 illustrated in FIG. 1. That signal is interpreted there. Then, the passthrough command C7 corresponding to that signal is issued to the DVD player of the information device 62.

On this occasion, not only the information indicating that the selection has been made is not only transmitted to the DVD player of the information device 62 via the interface 12, but also the identification information on the control device itself having made that selection of the company A DTV1" is also transmitted in such a form as affixed to the passthrough command C7.

At a time point T14, the DVD player of the information device 62 having received the passthrough command C7, preserves the following in two pieces of identification information the RAM 1 (5) as the control correspondence table 51 illustrated in FIG. 23. One is, the identification information on the control device itself having selected of the company A DTV1" (52) and the other is the identification information on the controlled portion being selected of DVD Disc1 (53).

At this moment, suppose that the DVD Disc 2 (55) that is the identification information on the controlled-portion has already been selected by the company A DTV 2" (54) of the control device 61. Then, it makes that, at a time point T14, the control correspondence table 51 as illustrated in FIG. 23 is preserved in the RAM 1 (5) of the DVD player of the information device 62.

Next, in the DTV1 of the control device 61, at a time point T8, the control button 42 of the remote controller 41 illustrated in FIG. 22 is operated. The signal due to the operation is transmitted to the user's operation converting section 16 of the DTV1 illustrated in FIG. 1. That signal is interpreted there. Then, the passthrough command C8 corresponding to that signal is issued to the DVD player of the information device 62. As a result, this passthrough command is transmitted to the interface 9 of the DVD player of the information device 62 via the interface 12 of the DTV 1 of the control device 61.

In this case, it is assumed that the control button 42 which is operated at this moment is the playback button 43 for playing back the DVD disc. Then, the command which is issued to the DVD player of the information device 62 is a play command among the passthrough command. On this occasion, the passthrough command C8 has also the identification information on the control device itself making relevant control, of the company A DTV 1.

At a time point T15, the DVD player of the information device 62 having received the passthrough command C8, can get the identification information on the issuer thereof as the company A DTV1. Therefore, that DVD player, can know, by referring to the control correspondence table 51 illustrated in FIG. 23, that the company A DTV 1 (52) corresponds to the DVD Disc 1 (53).

Accordingly, the DVD player of the information device 62 decides that the issuer of the "play" command being the passthrough being C8 is the DVD Disc 1. Then, it reproduces the DVD software 4 which is stored in the DVD Disc 1 of the DVD playback deck part 1 (3).

### [Passthrough command]

An outline of the passthrough command which is applied to the controlled-portion transmission control means of this embodiment will now be described.

The controlled-portion transmission control means causes the control device to transmit the control request to made by the user, to the information device via the communication means as a control request. The information device which receives this request controls its controlled-portion.

The passthrough command (Passthrough command) as one example of the controlled-portion transmission control means is prescribed by the AV/C commands (AV/C Panel Sub-unit Model and Command Set). The passthrough commands is given, in a unified form to the information device having a plurality of portions to be controlled without indicting the destination.

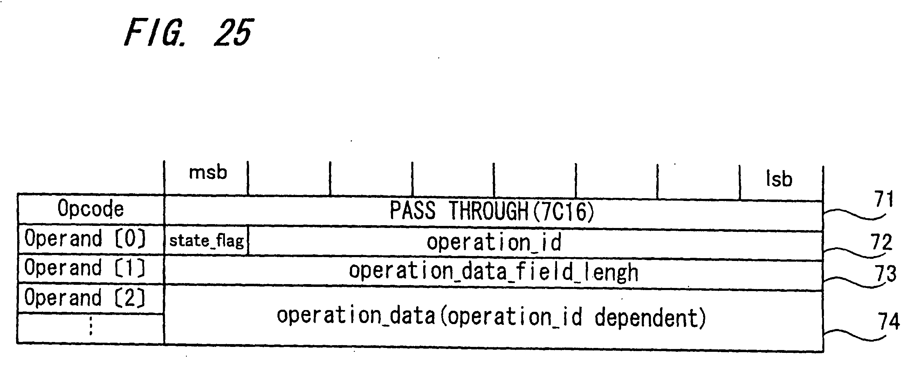

FIG. 25 is a diagram illustrating a format of the passthrough command.

The passthrough command is used to suitably transmit the user's operation to the target from the controller. The passthrough command is transferred from the controller regardless of the state of the target.

In FIG. 25, a numeral 71 denotes "PASS THROUGH (7C₁₆)" as an operation code (opcode). A numeral 72 denotes a state flag indicating the state of user's operation of the remote controller, as well as an operation ID (operation id) indicating an identification code corresponding to the user's operation, as an operand (operand) "0". A numeral 73 denotes an operation data field length indicating the length of the operation data field, as an operand "1". A numeral 74 denotes operation data (operation data) indicating contents of the operation data, as the operand (operand) "2" and thereafter.

### [IEEE 1394 serial bus]

An outline of the IEEE 1394 serial bus (hereinafter referred to as "the 1394 serial bus") which is applied to the interface of this embodiment will further be described.

First of all, its mode of connection will be described. In the 1394 serial bus, the mode of connection has a limitation imposed thereupon. By the connecting respective devices like a tree without loop, sixty-three devices at maximum can be connected to a single bus. The port of each device transmits its received data signal continuously to the other ports, with the result that the data signal is propagated through the whole bus.

Next, a description will be given of the cable. The cable is constructed of two pair of differential signal lines TPA, TPB, a power source pair of VG (ground) and VP (power source). By means of two signal lines of the TPA and TPB are performed dynamic configuration of the bus, arbitration for procuring the right to use the bus, and propagation of data signal. To the TPA is always applied a bias voltage, and the TPB determines the presence or absence of the active cable connection by detecting the bias application.

Next, a description will be given of signals of the physical layer section. The two signal lines of TPA and TPB each take three values of "1", "0", and "Z". The value "Z" represents a state of high impedance in which the signal lines are not driven by any one of their connected ports. From the TPA is transmitted a signal called "a strobe" while from the TPB is transmitted data. On the receiving side, the data and the strobe are exclusive-ORed to obtain a clock signal and the data is read out at a point of transition in the clock signal.

Next, a description will be given of the bus initialization. Each port detects the presence or absence of the bias which the TPA of a connection partner outputs to thereby determine whether a node is connected or disconnected. The node having detected a change in the connected state of port transmits a bus-reset signal for a prescribed period of time to another port connected thereto. The node having received it transmits a bus-reset signal to still another port connected thereto. This is repeated and finally the bus reset signal is transmitted to all connected nodes. Each node having received the bus-reset signal clears its previous form information, and its own node ID, etc. Thereafter, each node itself recognizes whether it is branch node or leaf node. Specifically, it is recognized whether each node connected to the bus is a branch in a state of being connected to a plurality of adjacent nodes, or whether each node is a leaf whose adjacent node is only one in number. Further, a parent-child relationship is determined with regard to each node, and a root node in the tree structure is determined.

Next, an asynchronous communication will be described again. As one of the methods for transferring a data packet used in the 1394 interface, there is an asynchronous communication. This is a unidirectional data packet transfer. The transmitting side expressly specifies a data packet transfer destination address in a packet header and transmits this data to the bus. The data packet propagates up to every node on the bus. The node which corresponds to the transfer destination address expressly indicated in the packet header receives that data packet, and returns a received result (ack). This series of transfer steps is called "an asynchronous subaction".

In this connection, in order to start the asynchronous subaction, the bus must be in a state of being idle for a prescribed period of time called "a subaction gap". Also, while the receiving side receives a data packet and returns the ack., the bus is in a state of being idle, too. This interval is called "an ack gap". Because the ack gap is sufficiently short as compared with the subaction gap, it never happens that other subactions are started.

Next, an isochronous communication will be described again. As another method of the methods of transferring a data packet that are used in the 1394 interface, there is an isochronous communication. The isochronous communication is performed in synchronism with a cycle start packet that is transmitted at prescribed intervals by a cycle master a piece of which exists on the bus. When receiving the cycle start packet, the node on the transmitting side of the isochronous communication starts arbitration after an isochronous gap passed and transmits an isochronous packet. In case there exists any other transmitting node, arbitration is subsequently started after the isochronous gap passed, and this node transmits the isochronous packet.

In this case, this isochronous gap is arranged to have a sufficiently short period of time as compared with the sub-action gap. Therefore, even if, during this period of time, there is any node that desires to make the asynchronous communication, no transmission can be made because that node cannot detect the subaction gap. In other words, for each cycle, the priority is given to the node that transmits the isochronous packet. The isochronous communication is performed in such a manner that data are broadcast into the bus without specifying the address of data transfer destination unlike the case of asynchronous communication. The isochronous packets each have a channel number of from 0 to 63 allotted thereto. So, the node needs only to receive the isochronous packet of a necessary channel number.

### [Modifications]

In the above-described embodiment, only one example is shown, in which a plurality of control devices and a single information device are connected with each other to form a network. The present invention, however, is not limited thereto. The invention can also be applied to a case where a plurality of control devices and a plurality of information devices are connected with each other to form a network. In this case, the control correspondence table which is produced in an information device may be transferred to another information device for use therein.

In the above described embodiment, an example is shown, in which the control correspondence table is used within the information device. However, the present invention is not limited thereto. It may be arranged that the control correspondence table is transferred to some control device and it is indicated by the other control device that the information device is in a state of being occupied.

In the above described embodiment, an example is shown, in which the device-peculiar information is acquired at the time of initializing the network. However, the present invention is not limited thereto. It may also be arranged as follows. The controlled portion information acquirement, means is not executed at the network-initializing time, but is executed at the time when the information device being an object is selected by the information device selection means.

In the above described embodiment, an example is shown, in which the information device selection means selects an information device from the information shown in the device GUI in the control device using the remote controller. The present invention, however, is not limited thereto. The selection may be made using the passthrough command.

In the above described embodiment, an example is shown, in which a device is selected using the information device selection means in the control device, thereby making the controlled portion notification means to be called. However, the present invention is not limited thereto. The calling of the controlled-portion notification means may be made using the passthrough command.

Also, in the above described embodiment, an example is shown, in which the IEEE 1394 format is used for the interface. However, the present invention is not limited thereto. The other USB (Universal Serial Bus) may be used therefor.

Also, in the above described embodiment, an example is shown in which a digital television receiver is used as the control device. However, the present invention is not limited thereto. A digital video tape recorder, a set top box, or a router may be used so long as it has a similar structure, operation, function and effect.

Also, in the above described embodiment, an example is shown, in which the communication means has the network formed by a wired connection through the IEEE 1394 interface. However, the present invention is not limited thereto. The control may be made from each of a plurality of control devices by wireless using a wireless interface. Further, the wireless communication may be such that, using the Bluetooth method, the control request is wirelessly made at a distance of several meters or so from each of a plurality of control devices. Moreover, the wireless communication may be such that, using an infrared ray method, the control request is made from each of a plurality of control devices based on the infrared ray method to thereby form a wireless LAN (Local Area Network). By doing so, the controlled-portion correlated with the relevant control device will be made to operate appropriately.

In the above described embodiment, an example is shown, in which the user employs the control device such as a digital television receiver. However, the present invention is not limited thereto. A portable telephone may be employed therefor.

### [Effect of the Invention]

The information control method according to the present invention is intended as follows. When the control device selects the controlled-portion which it wants to control from means for selecting the controlled-portion which is provided by the information device to the control device, the selected information itself and identification information on the control device having selected the controlled-portion are transmitted to the information device; the information device having received the selected information and the identification information on the control device causes, in its inventor, identification information on the controlled-portion selected and identification information on the control device to correspond to each other and preserves the both identification information as a control correspondence table; each time the control device selects the controlled-portion, the selection, the transmission, and the preservation are repeatedly performed; and when the information device receives a control request from the control device, the information device controls, by referring to the control correspondence table, the controlled-portion corresponding to the identification information on the issuer of the control request. Therefore, according to this information control system, the information device is provided with a structure which can preserve the control correspondence table, with the result that, even if a control command which the control device issues to the information device has therein no destination of the controlled-portion being an object of control, the information device can advantageously refer to the control correspondence table on receipt of control requests from a plurality of control devices. As a result, the information device can, by this referring, advantageously detect the controlled-portion associated with the control device and can determine that the detected portion is what the control device wants to control. Thus, the information device can advantageously make the controlled-portion operate properly.

Moreover, this information control method according to the present invention uses, as described above, the communication means that is an IEEE 1394 digital interface. Therefore, by referring to the device-peculiar information used in the IEEE 1394 format, the information device can advantageously detect the controlled-portion which is associated with the relevant control device.

Furthermore, this information control method according to the present invention uses, as described above, the means for selecting the controlled-portion and the means for controlling the controlled-portion which are both based on the use of the passthrough command defined by the AV/C Panel Subunit Model and Command Set. Therefore, by using the passthrough command that is given to the information device in a unified form without affixing addresses to a plurality of controlled-portions, the information device side can decide the controlled-portion and interpret the user's operation. This advantageously allows the control device to control or select the information device.

In addition, this information control method according to the present invention includes, as described above, the information device which can reproduce software information recorded in the digital versatile disc. Therefore, the information device can advantageously detect, with respect to the reproduction portions of the digital versatile disc being a plurality of controlled-portions, the controlled-portion associated with the relevant control device. On the other hand, the control device can advantageously control or select the information device.

Also, this information control method according to the present invention uses, as described above, the communication means which is an interface by wireless. Therefore, by making a control request from each of a plurality of control devices by wireless, it is advantageously possible to cause the controlled-portion associated with the relevant control device to operate properly.

Moreover, this information control method according to the present invention uses, as described above, wireless communication of a Bluetooth method. Therefore, by making a control request from each of a plurality of control devices by wireless at a distance of several meters or so, it is advantageously possible to cause the controlled-portion associated with the relevant control device to operate appropriately.

Furthermore, this information control method according to the present invention uses, as described above, wireless communication of an infrared ray method. Therefore, by making a control request from each of a plurality of control devices using the infrared ray method, it is advantageously possible to cause the controlled portion associated with the relevant control device to operate properly.

In addition, this information control method according to the present invention includes, as described above, the information device which can reproduce audio/visual information recorded in a hard disc. Therefore, by expansion decoding the audio/visual information recorded in the compression-coded form for reproduction, the information device can advantageously detect, with respect to the reproduction portions of the hard disc regarding the audio/visual information being a plurality of controlled-portions, the controlled-portion associated with the relevant control device. On the other hand, the control device can advantageously control or select the information device.

Also, this information control method according to the present invention includes, as described above, the control device which is a digital television receiver capable of receiving digital broadcast. Therefore, by making a control request from each of the digital television receivers being a plurality of control devices, it is advantageously possible to cause the controlled-portion associated with the relevant control device to operate appropriately.

Moreover, the information processing apparatus according to the present invention comprises: a plurality of portions to be controlled which can be controlled by the control device; transmitting means for providing selection means to the control device in order that the control device can select a portion to be controlled which it wants to control; receiving means for receiving information itself which is selected by the selection means and identification information on the control device having selected the portion to be controlled; preserving means for preserving the identification information on the portion to be controlled which is selected and the identification information on the control device as a control correspondence table in which the both information are in correspondence with each other; and control means in which, each time the control device selects the portion to be controlled, the provision of the selection means, the reception made by the receiving means, and the preservation made by the preserving means are repeatedly performed, and which, when the receiving means receives a control request from the control device, by referring to the control correspondence table which is preserved, controls the portion to be controlled which corresponds to the identification information on an issuer of the control request. Therefore, according to this information processing apparatus, the information device has such a structure as can preserve the control correspondence table. As a result, even if the control command to the information device issued by the control device holds no destination of the portion to be controlled being an object of control, the information device can advantageously refer to the control correspondence table upon receipt of the control requests from a plurality of control devices. As a result, the information device can, by this referring, advantageously detect the portion to be controlled which is associated with that control device and can determine that the detected portion is what the control device wants to control. It is thus advantageously possible to construct the information device which makes that controlled-portion operate appropriately.

Furthermore, the information control system according to the present invention includes the following control device and information device. The control device has selection means for selecting the portion to be controlled and control request means for making a request to control the selected portion to be controlled. The information device has: a plurality of portions to be controlled which can be controlled by the control device; transmitting means for providing selection means to the control device in order that the control device can select a portion to be controlled which it wants to control; receiving means for receiving information itself selected by the selection means and identification information on the control device having selected the portion to be controlled; preserving means for preserving the identification information on the portion to be controlled which is selected and the identification information on the control device as a control correspondence table in which the both information are in correspondence with each other; and control means in which, each time the control device selects the portion to be controlled, the provision of the selection means, the reception made by the receiving means, and the preservation made by the preserving means are repeatedly performed, and which, when the receiving means receives a control request from the control device, by referring to the control correspondence table which is preserved, controls the portion to be controlled which corresponds to the identification information on an issuer of the control request. Therefore, the following advantages are brought about. Even if the control command to the information device issued by the control device holds no destination of the portion to be controlled being an object of control, the information device can advantageously refer to the control correspondence table upon receipt of control requests from a plurality of control devices. As a result, the information device can, by this referring, advantageously detect the portion to be controlled which is associated with the relevant control device and can determine the detected portion is what the control device wants to control. It is thus advantageously possible to construct the system which can operate properly that portion to be controlled.

Having described preferred embodiments of the present invention with reference to the accompanying drawings, it is to be understood that the present invention is not limited to the above-mentioned embodiments and that various changes and modifications can be effected therein by one skilled in the art without departing from the scope of the present invention as defined in the appended claims.

## Claims

1. An information control method for controlling a plurality of portions (3, 7) to be controlled in an information device (1; 62) by a plurality of control devices (10, 20; 61) in a network which is formed by connecting the information device (1) having the plurality of portions to be controlled to the plurality of control devices capable of controlling the information device via communication means (9, 12, 18, 19) having a prescribed communication format, comprising the steps of:
selecting a said portion to be controlled, which a said control device (10, 20) desires to control, from means for selecting said portion to be controlled which is provided by said information device (1) to said control device;
transmitting selected information and identification information on said control device that has selected said portion to be controlled to said information device (1);
preserving identification information on said portion to be controlled which is selected and said identification information on said control device as a control correspondence table (51) in which both the identification information are brought into correspondence with each other by said information device (1) that has received said selected information and said identification information on said control device;
repeating said selecting step, said transmitting step and said preserving step each time said control device selects said portion to be controlled; and
controlling said portion to be controlled which corresponds to identification information on an issuer of a control request, by referring to said control correspondence table (51) which is preserved, when said information device receives said control request from said control device.

2. An information control method according to claim 1, wherein said communication means (9, 12, 18, 19) comprises an IEEE 1394 digital interface.

3. An information control method according to claim 1, wherein each of said means for selecting the portion to be controlled and means for controlling the portion to be controlled uses a pass-through command which is defined in an AV/C panel subunit model and command set.

4. An information control method according to claim 1, wherein said information device (1) is capable of reproducing software information recorded in a digital versatile disc.

5. An information control method according to claim 1, wherein, said communication means (18, 19) uses an interface based on wireless communication.

6. An information control method according to claim 5, wherein said wireless communication uses the Bluetooth method.

7. An information control method according to claim 5, wherein said wireless communication uses an infra-red ray method.

8. An information control method according to claim 1, wherein said information device (1) is capable of reproducing audio visual information recorded in a hard disc.

9. An information control method according to claim 1, wherein said control device is a digital television receiver which can receive digital broadcast.

10. An information processing apparatus (1) which is connected to a plurality of control devices (10, 20) via communication means (18,19) having a prescribed communication format to form a network and is controlled by said control device, comprising:
a plurality of portions (3, 7) to be controlled, which can e controlled by a said control device (10, 20);
transmitting means for providing selection means to said control device in order that said control device can select a portion to be controlled, which said control device wants to control;
receiving means for receiving information selected by the selection means and identification information on said control device that has selected the portion to be controlled;
preserving means for preserving identification information on the portion to be controlled, which is selected, and identification information on said control device, as a control corresponding table (51) in which both the identification information are in correspondence with each other; and
control means (2) by which, each time said control device selects the portion to be controlled, the provision of the selection means, the reception made by the receiving means, and the preservation made by the preserving means are repeatedly performed, and which, when the receiving means receives a control request from said control device, by referring to said control correspondence table (51) which is preserved, controls the portion to be controlled, which corresponds to the identification information on an issuer of the control request.

11. An information control system in which an information device (1; 62) having a plurality of portions (3, 7) to be controlled and a plurality of control devices (10, 20, 61) capable of controlling the information device are connected via communication means (9, 12, 18, 19) having a prescribed communication format to form a network and said control device can control the portions to be controlled in the information device, and wherein said control device has a selection means for selecting the portion to be controlled and control request means for making a request to control the selected portion to be controlled, and said information device (1; 62) includes:
a plurality of portions (3, 7) to be controlled which is controllable by a said control device (10, 20);
transmitting means for providing the selection means to said control device in order that said control device can select the portion to be controlled, which said control device wants to control;
receiving means for receiving information selected by the selection means and identification information on the control device that has selected the portion to be controlled;
preserving means for preserving identification information on said selected portion to be controlled, as a control correspondence table (51) in which both the identification information are in correspondence with each other; and;
control means (2) by which, each time said control device selects said portion to be controlled, the provision of the selection means, the reception made by the receiving means, and the preservation made by the preserving means are repeatedly performed, and which, when the receiving means receives a control request from said control device, by referring to said control correspondence table (51) which is preserved, controls said portion to be controlled, which corresponds to the identification information on an issuer of the control request.

## Patentansprüche

1. Informationsteuerungsverfahren zum Steuern einer Mehrzahl von zu steuernden Teilen (3, 7) in einem Informationsgerät (1; 62) mittels einer Mehrzahl von Steuergeräten (10, 20; 61) in einem Netzwerk, das durch Verbinden des die Mehrzahl von zu steuernden Teilen aufweisenden Informationsgeräts (1) mit der Mehrzahl von Steuergeräten gebildet ist, die in der Lage sind, das Informationsgerät über eine Kommunikationseinrichtung (9, 12, 18, 19) zu steuern, die ein vorgeschriebenes Kommunikationsformat hat,
mit den Verfahrensschritten:
Auswählen eines der genannten zu steuernden Teile, den ein Steuergerät (10, 20) zu steuern wünscht, von Mitteln zum Auswählen des zu steuernden Teils, die von dem Informationsgerät (1) an das Steuergerät geliefert werden,
Senden der ausgewählten Information und der Identifizierungsinformation über das Steuergerät, das den zu steuernden Teil ausgewählt hat, an das Informationsgerät (1),
Sichern der Identifizierungsinformation über den zu steuernden Teil, der ausgewählt ist, und der Identifizierungsinformation über das Steuergerät, als Steuerkorrespondenztabelle (51), in der beide Identifizierungsinformationen mittels des Informationsgeräts (1), das die ausgewählte Information und die Identifizierungsinformation über das Steuergerät empfangen hat, in Korrespondenz zueinander gebracht sind,
Wiederholen des Auswahlschritts, des Sendeschritts und des Sicherungsschritts jedesmal, wenn das Steuergerät den zu steuernden Teil auswählt, und
Steuern des zu steuernden Teils, der der Identifizierungsinformation über eine eine Steueranforderung ausgebende Stelle entspricht, durch Bezugnahme auf die gesicherte Steuerkorrespondenztabelle (51), wenn das Informationsgerät die Steueranforderung von dem Steuergerät empfängt.

2. Informationsteuerungsverfahren nach Anspruch 1, bei dem die Kommunikationseinrichtung (9, 12, 18,19) ein digitales IEEE-1394-Interface umfaßt.

3. Informationsteuerungsverfahren nach Anspruch 1, bei dem die Einrichtung zum Auswählen des zu steuernden Teils und die Mittel zum Steuern des zu steuernden Teils jeweils einen Pass-Through-Befehl benutzen, der in einem AV/C-Panel-Untereinheitsmodell und -Befehlssatz definiert ist.

4. Informationsteuerungsverfahren nach Anspruch 1, bei dem das Informationsgerät (1) in der Lage ist, eine Software-Information zu reproduzieren, die auf einer DVD (Digital Versatile Disc) aufgezeichnet ist.

5. Informationsteuerungsverfahren nach Anspruch 1, bei dem die Kommunikationseinrichtung (18, 19) ein auf drahtloser Kommunikation basierendes Interface benutzt.

6. Informationsteuerungsverfahren nach Anspruch 5, bei dem die drahtlose Kommunikation das Bluetooth-Verfahren benutzt.

7. Informationsteuerungsverfahren nach Anspruch 5, bei dem die drahtlose Kommunikation ein Verfahren mit Infrarotstrahl benutzt.

8. Informationsteuerungsverfahren nach Anspruch 1, bei dem das Informationsgerät (1) in der Lage ist, audiovisuelle Informationen zu reproduzieren, die auf einer Festplatte aufgezeichnet sind.

9. Informationsteuerungsverfahren nach Anspruch 1, bei dem das Steuergerät ein digitaler Fernsehempfänger ist, der digitalen Rundfunk empfangen kann.

10. Informationsverarbeitungsgerät (1), das über eine Kommunikationseinrichtung (18, 19), die ein vorgeschriebenes Kommunikationsformat hat, mit einer Mehrzahl von Steuergeräten (10, 20) verbunden ist, um ein Netzwerk zu bilden, und durch das genannte Steuergerät gesteuert wird,
mit einer Mehrzahl von zu steuernden Teilen (3, 7), die von einem der genannten Steuergeräte (10, 20) gesteuert werden können,
mit einer Sendeeinrichtung zur Lieferung von Auswahlmitteln an das Steuergerät, damit dieses Steuergerät einen zu steuernden Teil auswählen kann, den das Steuergerät zu steuern wünscht,
mit einer Empfangseinrichtung zum Empfangen einer von den Auswahlmitteln ausgewählten Information und einer Identifizierungsinformation über das Steuergerät, das den zu steuernden Teil ausgewählt hat,
mit einer Sicherungseinrichtung zum Sichern der Identifizierungsinformation über den zu steuernden Teil, der ausgewählt ist, und der Identifizierungsinformation über das Steuergerät als Steuerkorrespondenztabelle (51), in der beide Identifizierungsinformationen in Korrespondenz zueinander stehen, und
mit einer Steuereinrichtung (2), mit deren Hilfe jedesmal, wenn das Steuergerät den zu steuernden Teil auswählt, die Lieferung der Auswahlmittel, der von der Empfangseinrichtung vorgenommene Empfang und die von der Sicherungseinrichtung vorgenommene Sicherung wiederholt durchgeführt werden, und die dann, wenn die Empfangseinrichtung eine Steueranforderung aus dem Steuergerät empfängt, den zu steuernden Teil, der der Identifizierungsinformation über die die Steueranforderung ausgebende Stelle entspricht, durch Bezugnahme auf die Steuerkorrespondenztabelle (51), die gesichert ist, steuert.

11. Informationssteuerungssystem, in dem ein Informationsgerät (1; 62), das eine Mehrzahl von zu steuernden Teilen (3, 7) und eine Mehrzahl von Steuergeräten (10, 20, 61) aufweist, die in der Lage sind, das Informationsgerät zu steuern, über eine Kommunikationseinrichtung (9, 12, 18, 19), die ein vorgeschriebenes Kommunikationsformat hat, miteinander verbunden sind, um ein Netzwerk zu bilden, und das genannte Steuergerät die zu steuernden Teile in dem Informationsgerät steuern kann, wobei das Steuergerät Auswahlmittel zum Auswählen des zu steuernden Teils sowie Steueranforderungsmittel zur Erzeugung einer Anforderung zur Steuerung des ausgewählten, zu steuernden Teils besitzt, und wobei das Informationsgerät (1; 62) umfaßt:
eine Mehrzahl von zu steuernden Teilen (3, 7), die durch eines der genannten Steuergeräte (10, 20) gesteuert werden können,
eine Sendeeinrichtung zur Lieferung der Auswahlmittel an das Steuergerät, damit das Steuergerät den zu steuernden Teil auswählen kann, den das Steuergerät zu steuern wünscht,
eine Empfangseinrichtung zum Empfangen einer von den Auswahlmitteln ausgewählten Information und einer Identifizierungsinformation über das Steuergerät, das den zu steuernden Teil ausgewählt hat,
mit einer Sicherungseinrichtung zum Sichern der Identifizierungsinformation über den ausgewählten zu steuernden Teil als Steuerkorrespondenztabelle (51), in der beide Identifizierungsinformationen in Korrespondenz zueinander stehen, und
eine Steuereinrichtung (2), mit deren Hilfe jedesmal, wenn das Steuergerät den zu steuernden Teil auswählt, die Lieferung der Auswahlmittel, der von der Empfangseinrichtung vorgenommene Empfang und die von der Sicherungseinrichtung vorgenommene Sicherung wiederholt durchgeführt werden, und die dann, wenn die Empfangseinrichtung eine Steueranforderung aus dem Steuergerät empfängt, den zu steuernden Teil, der der Identifizierungsinformation über die die Steueranforderung ausgebende Stelle entspricht, durch Bezugnahme auf die Steuerkorrespondenztabelle (51), die gesichert ist, steuert.

## Revendications

1. Procédé de commande d'information pour commander une pluralité de parties (3,7) devant être commandées dans un dispositif d'information (1;62) au moyen d'une pluralité de dispositifs de commande (10,20;61) dans un réseau qui est formé par raccordement du dispositif d'information (1) possédant la pluralité de parties devant être commandées à la pluralité de dispositifs de commande aptes à commander le dispositif d'information par l'intermédiaire de moyens de communication (9,12,18,19) possédant un format de communication prescrit, comprenant les étapes consistant à :
sélectionner ladite partie devant être commandée, que ledit dispositif de commande (10,20) désire commander, à partir de moyens servant à sélectionner ladite partie devant être commandée, qui est fournie par ledit dispositif d'information (1) audit dispositif de commande;
transmettre une information sélectionnée et une information d'identification audit dispositif de commande qui a sélectionné ladite partie devant être commandée, audit dispositif d'information (1);
conserver l'information d'identification dans ladite partie devant être commandée, qui est sélectionnée, et ladite information d'identification dans ledit dispositif de commande, en tant que table de correspondance de commande (51), dans laquelle deux informations d'identification sont mises réciproquement en correspondance par ledit dispositif d'information (1) qui a reçu ladite information sélectionnée et ladite information d'identification dans ledit dispositif de commande;
répéter ladite étape de sélection, ladite étape d'émission et ladite étape de conservation chaque fois que ledit dispositif de commande sélectionne ladite partie devant être commandée; et
commander ladite partie devant être commandée, qui correspond à l'information d'identification concernant l'identité délivrant une demande de commande, par référence à ladite table de correspondance de commande (51), qui est conservée, lorsque ledit dispositif d'information reçoit ladite demande de commande de la part dudit dispositif de commande.

2. Procédé de commande d'information selon la revendication 1, selon lequel lesdits moyens de communication (9,12, 18,19) comprennent une interface numérique IEEE 1394.

3. Procédé de commande d'information selon la revendication 1, dans lequel chacun desdits moyens pour sélectionner la partie devant être commandée et des moyens pour commander la partie devant être commandée utilise une commande de transfert qui est définie dans un ensemble de modèles de sous-unités de panneaux et d'instructions AV/C.

4. Procédé de commande d'information selon la revendication 1, dans lequel ledit dispositif d'information (1) est à même de reproduire une information logicielle enregistrée dans un disque numérique versatile.

5. Procédé de commande d'information selon la revendication 1, dans lequel lesdits moyens de communication (18,19) utilisent une interface basée sur une communication sans fil.

6. Procédé de commande d'information selon la revendication 5, selon lequel ladite communication sans fil utilise le procédé Bluetooth.

7. Procédé de commande d'information selon la revendication 5, selon lequel ladite communication sans fil utilise un procédé utilisant un rayonnement infrarouge.

8. Procédé de commande d'information selon la revendication 1, selon lequel ledit dispositif d'information (1) est capable de reproduire une information audiovisuelle enregistrée dans un disque dur.

9. Procédé de commande d'information selon la revendication 1, selon lequel ledit dispositif de commande est un récepteur de télévision numérique qui peut recevoir une diffusion numérique.

10. Dispositif de traitement d'information (1), qui est connecté à une pluralité de dispositifs de commande (10,20) par l'intermédiaire de moyens de communication (18,19) ayant un format de communication prescrit pour former un réseau et commandé par ledit dispositif de commande, comprenant :
une pluralité de parties (3,7) devant être commandées, qui peuvent être commandées par l'un desdits dispositifs de commande (10,20);
des moyens d'émission pour fournir des moyens de sélection audit dispositif de commande de manière que ledit dispositif de commande puisse sélectionner une partie devant être commandée, que ledit dispositif de commande désire commander;
des moyens de réception pour recevoir l'information sélectionnée par les moyens de sélection et l'information d'identification concernant ledit dispositif de commande qui a sélectionné la partie devant être commandée;
des moyens de conservation pour conserver une information d'identification concernant la partie devant être commandée, qui est sélectionnée, et l'information d'identification concernant ledit dispositif de commande, sous la forme d'une table de correspondance de commande (51), dans laquelle les deux informations d'identification sont en correspondance réciproque; et
des moyens de commande (2), à l'aide desquels, chaque fois que ledit dispositif de commande sélectionne la partie devant être commandée, la fourniture des moyens de sélection, la réception effectuée par les moyens de réception et la conservation réalisée par les moyens de conservation sont exécutées de façon répétée, et qui, lorsque les moyens de réception reçoivent une demande de commande de la part dudit dispositif de commande, commandent, par référence à ladite table de correspondance de commande (51) qui est conservée, la partie devant être commandée, qui correspond à l'information d'identification concernant une entité délivrant la demande de commande.

11. Système de commande d'information, dans lequel un dispositif d'information (1;62) ayant une pluralité de parties (3,7) devant être commandées et une pluralité de dispositifs de commande (10,20,61) aptes à commander le dispositif d'information sont connectés par l'intermédiaire de moyens de communication (9,12,18,19) possédant un format de communication prescrit de manière à former un réseau, et ledit dispositif de commande peut commander les parties devant être commandées dans le dispositif d'information, et dans lequel ledit dispositif de commande possède des moyens de sélection pour sélectionner la partie devant être commandée et commander les moyens de demande de commande pour envoyer une demande pour commander la partie sélectionnée devant être commandée, et ledit dispositif d'information (1;62) comprend :
une pluralité de parties (3,7) devant être commandées, qui peuvent être commandées par l'un desdits dispositifs de commande (10,20);
des moyens d'émission pour délivrer des moyens de sélection audit dispositif de commande de manière que ledit dispositif de commande puisse sélectionner une partie devant être commandée, que ledit dispositif de commande désire commander;
des moyens de réception pour recevoir l'information sélectionnée par les moyens de sélection et l'information d'identification concernant ledit dispositif de commande qui a sélectionné la partie devant être commandée;
des moyens de conservation pour conserver une information d'identification concernant la partie devant être commandée, qui est sélectionnée, sous la forme d'une table de correspondance de commande (51), dans laquelle les deux informations d'identification sont en correspondance réciproque; et
des moyens de commande (2) à l'aide desquels, chaque fois que ledit dispositif de commande sélectionne la partie devant être commandée, la fourniture des moyens de sélection, la réception effectuée par les moyens de réception et la conservation réalisée par les moyens de conservation sont exécutées de façon répétée, et qui, lorsque les moyens de réception reçoivent une demande de commande de la part dudit dispositif de commande, commandent, par référence à ladite table de correspondance de commande (51) qui est conservée, la partie devant être commandée, qui correspond à l'information d'identification concernant une entité délivrant la demande de commande.
